(19) Europäisches Patentamt
European Patent Office
Office européen des brevets

(11) EP 2 838 231 B1

(12) **EUROPEAN PATENT SPECIFICATION**

(45) Date of publication and mention of the grant of the patent:
**01.02.2017 Bulletin 2017/05**

(51) Int Cl.:
***H04L 12/851*** *(2013.01)*

(21) Application number: **13167905.2**

(22) Date of filing: **15.05.2013**

(54) **Network system and access controller and method for operating the network system**

Netzwerksystem und Zugangssteuerung und Verfahren für den Betrieb des Netzwerksystems

Système de réseau et contrôleur d'accès et procédé pour faire fonctionner le système de réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.02.2015 Bulletin 2015/08**

(73) Proprietor: **NTT DoCoMo, Inc.**
**Chiyoda-ku**
**Tokyo 100-6150 (JP)**

(72) Inventors:
- **Khan, Ashiq**
  **81669 München (DE)**
- **Kiess, Wolfgang**
  **81373 München (DE)**
- **Triay Marques, Joan**
  **80336 München (DE)**

(74) Representative: **Zinkler, Franz et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**US-A1- 2009 279 568 US-A1- 2012 155 264**

- **Georgia Kontesidou ET AL: "Openflow Virtual Networking: A Flow- Based Network Virtualization Architecture", , 1 November 2009 (2009-11-01), XP055091778, Retrieved from the Internet: URL:http://www.diva-portal.org/smash/get/diva2:302700/FULLTEXT01.pdf [retrieved on 2013-12-05]**
- **SAURAV DAS ET AL: "MPLS with a simple OPEN control plane", OPTICAL FIBER COMMUNICATION CONFERENCE, 2011. TECHNICAL DIGEST. OFC/NFOEC, IEEE, 6 March 2011 (2011-03-06), pages 1-3, XP031946681, ISBN: 978-1-4577-0213-6**
- **ROB SHERWOOD ET AL: "FlowVisor: A Network Virtualization Layer", INTERNET CITATION, 14 October 2009 (2009-10-14), pages 1-15, XP002639208, Retrieved from the Internet: URL:http://www.openflow.org/downloads/technicalreports/openflow-tr-2009-1-flowvisor. pdf> [retrieved on 2011-05-27]**
- **Santiago Alvarez: "QoS for IP/MPLS Networks" In: "QoS for IP/MPLS Networks", 1 June 2006 (2006-06-01), XP055091872, page 66, * page 66 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 838 231 B1

**Description**

The present invention relates to communication networks and, particularly, to a network system and an access controller for a communication network relying on a physical transport network.

Fig. 7 illustrates a schematic representation of multiple virtual networks on the same transport network infrastructure. Exemplarily, it is illustrated that a voice service 70 forms quality of service class 0, and a video service 71 forms quality of the service class 1 of the physical transport network interface illustrated by exemplary switches 72 and connection 73 between these switches. Fig. 7 furthermore illustrates two dotted lines 74, 75. These dotted lines 74, 75 illustrate the bandwidth assigned per service to each virtual network, in this case represented by 4G and 5G. Exemplarily, a first virtual network for 4G would be allocated the bandwidth below dotted line 75 for QoS class 0, and the same virtual 4G network would consume the bandwidth illustrated below dotted line 74 for QoS class 1. Consequently, a second virtual network 5G, for example, would consume the bandwidth above the dotted line 75 for QoS class 0 and the bandwidth above dotted line 74 for QoS class 1. However, currently existing physical transfer transport networks are not in a position to support different virtual networks. Well-known transport networks are operating in accordance with the label switching based transport protocol such as MPLS or any other transport protocol. Such transport protocol cannot flexibly implement different virtual networks on the same single physical transport network and, particularly, such protocols cannot provide a per virtual network quality of service guarantee.

On the other hand, software defined networks (SDN), like those based on OpenFlow (OF), do not have a flexible quality of service support for virtual networks.

US 2009/0279568 A1 discloses a method and apparatus for establishing a virtual private network (VPN) session for a priority request. The method and apparatus includes identifying a priority request from a plurality of VPN session request classes. Reserved bandwidth is allocated to the priority request if a nominally allocated bandwidth is insufficient to satisfy the priority request. Once the allocated bandwidth is assigned, admission control is applied to the priority request. A service provider network comprises service provider equipment including a core having a plurality of nodes such as routers and switches interconnected via various links. An edge node such as an IP service gateway (IPSG) may be provisioned to serve a number of enterprise VPN customers each with a number of end users.

Therefore, it is an object of the present invention to provide a more flexible network system.

This object is achieved by a network system of claim 1, an access controller in accordance with claim 13, a method of operating a network system in accordance with claim 16 or a computer program in accordance with claim 17.

The present invention is based on the finding that a network system comprising a physical transport network for transporting data from a session between two terminals is connected to a separate access controller controlling each and every access from a source terminal to the physical transport network. The access controller is connected between a source terminal and a physical transport network and the access controller is configured for controlling a start of a first session in a first virtual network and a start of a second session in a second virtual network using a data record comprising, for each virtual network, information on available bandwidth of the virtual network. Particularly, the present invention is advantageous in that it provides support for different virtual networks on a single physical transport network. A further advantage of preferred embodiments of the present invention is that a quality of service policy for each virtual network is supported on one and the same single physical transport network.

In an embodiment, the first virtual network provides a first plurality of quality of service classes, and the second virtual network provides a second plurality of quality of service classes, and the physical transport network additionally provides a plurality of transport quality of service classes. In this case, the access controller is configured to control the start of the first session or the second session using information on available bandwidth for a specifically requested quality of service class for the corresponding virtual network.

Preferably, the data record stored in the access controller comprises, for each virtual network, information on available bandwidth for each quality of service class of the first and second plurality of quality of service classes and, for each quality of service class, a sum of maximum bandwidths for all virtual networks is smaller than or equal to a maximum bandwidth of the corresponding transport quality of service class. Further embodiments relate to a handling of a session establishment request from a source terminal. This session establishment request is intercepted by the access controller and, when the required bandwidth for this session and the required quality of service class in the corresponding virtual network is available, then this session establishment request is forwarded to the physical transport network. When, however, the required bandwidth is not available, then a preemption procedure is started, where the preemption procedure can easily be implemented to operate only within one and the same virtual network, which is preferred for most situations, since virtual networks are particularly useful in that users of one virtual network are not influenced by users of the other virtual network even though both virtual networks are implemented on one and the same physical transport network.

Nevertheless, in situations where the separation between the virtual networks is not the main target but throughput is the main target, then even a very efficient and transparent preemption algorithm can be performed not only within one and the same virtual network, but within a part or all virtual networks being established on a physical transport network.

Preferably, software-defined networks are combined with MPLS-type protocols where GMPLS, for example, is an example for other variants. In a preferred embodiment, SDN works as an admission control domain (ACD), which does a per-virtual network admission control in conformance with MPLS tunneling domain (TD) QoS policy.

The present invention is particularly advantageous in that it does not require any changes in already standardized and/or deployed MPLS-based transport infrastructures for accommodating multiple virtual networks with their desired quality of service guarantee. This saves costs on the one hand and, additionally, avoids errors which could occur if an already working and standardized and deployed transport infrastructure had to be changed. Furthermore, the present invention also does not require the software-defined networks (SDNs) to support high-end quality of service features. This is also an advantage due to the fact that reliability and efficiency are further enhanced.

Preferably, multiple virtual networks with a quality of service (QoS) guarantees should be provisioned on top of a single physical transport network with label-switching based tunneling protocol such as MPLS.

Subsequently, preferred embodiments of the present invention are described with respect to the accompanying drawings, in which:

| | |
|---|---|
| Fig. 1 | is a block diagram of a preferred network system; |
| Fig. 2 | illustrates further details on the network system; |
| Fig. 3 | illustrates a preferred data record stored in the access controller; |
| Fig. 4 | illustrates a procedure for handling a session establishment request from a source terminal; |
| Fig. 5 | illustrates more details on the network system; |
| Fig. 6 | illustrates a preferred implementation of the access controller; |
| Fig. 7 | illustrates a scenario with multiple virtual networks on the same transport network infrastructure; |
| Fig. 8 | illustrates an overview for defining the problem behind the invention; |
| Fig. 9 | illustrates a preferred implementation of the present invention in an overview scenario; |
| Fig. 10a | illustrates a preferred embodiment with a centralized network management system/OSS; |
| Fig. 10b | illustrates an embodiment with a distributed network management system/OSS; |
| Fig. 11 | illustrates a message flow for a virtual network reservation request; |
| Fig. 12 | illustrates an overview when a session admission occurs; |
| Fig. 13a | illustrates a first part of a message flow for a session admission; |
| Fig. 13b | illustrates a second part for a message flow in a session termination; |
| Fig. 14a | illustrates bandwidth allocation with the maximum allocation model; |
| Fig. 14b | illustrates further details on the maximum allocation model; |
| Fig. 15 | illustrates a bandwidth allocation procedure with the Russian doll model; |
| Fig. 16a,b | illustrate procedures for a preemption inside a virtual network; |
| Fig. 17 | illustrates details on the preemption among virtual networks; |
| Fig. 18 | illustrates a first implementation of a preemption sequence; |
| Fig. 19 | illustrates a further implementation of a preemption sequence. |

Fig. 1 illustrates a network system 100. The network system comprises a physical transport network 120 for transporting data for a session between two terminals such as a source terminal 150 or a destination terminal 152. Furthermore, the network system comprises an access controller 170 connected between the source terminal 150 and the physical transport network 120. The access controller 170 is configured for controlling a start of a first session in a first virtual network and a start of a second session in a second virtual network using a data record stored in storage 171, where this data record comprises, for each virtual network, information on the available bandwidth for this virtual network. Therefore, the access controller always has an overview of whether each virtual network running on the physical transport network still has available bandwidth or not. When, for example, a new session request for one virtual network would result, together with the currently used bandwidth in a total bandwidth greater than the available bandwidth, then the access controller would deny this session request for this virtual network. However, when there is still available bandwidth for the other virtual network, then this would mean that the user of the first virtual network would be denied so that there is still room for the user of the second network, so that two different virtual networks operating on one and the same physical transport network with limited bandwidth resources are actually separated. Thus, each virtual network can guarantee the required quality of service either for a single quality of service class or a plurality of quality of service classes per each virtual network.

As illustrated in Fig. 2, the physical network 120 is implemented to provide a plurality of transport quality of service classes. Furthermore, the network system is implemented to provide a first virtual network 121 with a plurality of quality of service classes and a second virtual network 122 also with a plurality of quality of service classes. Furthermore, in the implementation of Fig. 2 with a plurality of virtual networks each virtual network having a plurality of quality of service classes, the data record in the access controller 170 of Fig. 1 comprises, for each virtual network, information on an available bandwidth for each quality of service class, and, importantly, the sum of the maximum bandwidth is smaller than the maximum bandwidth of the corresponding transport quality of service class. In other words, when the transport quality of service class provides a bandwidth of 20 (normalized) for QoS class 0 and a bandwidth of 40 for QoS class 1, when QoS class 1 of the first virtual network and QoS class 1 for the second virtual network may consume 40 at the maximum, and QoS class 0 for the first virtual network and QoS class 0 for the second virtual network can consume 20 in the maximum situation. Hence, in the Fig. 2 embodiment, each virtual network is implemented to have at least two and a maximum the same number of QoS classes as the transport physical network, and the sum of bandwidths for the same QoS class in each virtual network is lower than or equal to the bandwidth of the corresponding QoS class in the physical transport network.

Preferably, as illustrated in Fig. 3, the data record or memory storage place 171 comprises a stored table. The stored table has, for each virtual network, a virtual network identification 171a, a quality of service class identification 171b, information on a total bandwidth for each quality of service class illustrated at 171c and information on a currently available or currently used bandwidth for each quality of service class 171d. Furthermore, the stored table preferably comprises a further data record illustrated at 172, not only storing the information for the virtual networks, but also storing the information for the physical transport network, i.e., how many available bandwidth is in QoS class 1 of the physical transport network and QoS class 2 of the physical transport network or even more QoS classes. Naturally, the present invention is not limited only to virtual networks or to virtual network QoS classes, but the number of virtual networks and QoS classes per virtual network can be selected within the limits of the available bandwidth and the corresponding requirements for bandwidth per virtual network. Basically, the access controller is configured to hold the further data records 172 describing the quality of service policy of the physical transport network, the quality of service policy comprising information on quality of service classes supported by the physical transport network and information on an available bandwidth for each quality of service class of the physical transport network. Hence, the QoS classes used by the virtual networks must be in accordance to the QoS classes defined by the physical network.

Fig. 4 illustrates an overview flowchart for handling a session establishment request. Particularly, the access controller is configured to perform the procedure illustrated in Fig. 4. Particularly, the access controller 170 of Fig. 1 is configured for intercepting 173 a session establishment request from the source terminal 150 of Fig. 1. The session establishment request comprises a virtual network identification identifying the first virtual network, a required bandwidth for this new session and a required quality of service class. Then, the access controller 170 checks 174, whether the required bandwidth for this session and the required quality of service class is available. In order to check this, the access controller accesses the data record 171 stored in the storage and compares the current bandwidth entry with the required bandwidth entry for the specific virtual network identified in the session establishment request and the quality of service class additionally identified in the session establishment request.

Hence, Fig. 4 specifies the general concept of forwarding the session establishment request to the transport/tunneling domain. In a further embodiment, it is preferred to perform such a mechanism through a command line interface directly to the element management system of the ingress LER.

When it turns out that enough bandwidth is available, i.e., when block 174 is terminated with "yes", then the session establishment request is forwarded 175 to the physical transport network 120 of Fig. 1.

When, however, it is determined that not enough bandwidth is available for the required virtual network and the quality of service class of this virtual network, then block 176 is performed, and as illustrated in Fig. 4, a preemption algorithm either only in the own virtual network or between different virtual networks can be performed as discussed later on, particularly with respect to Figs. 16a, 16b (preemption inside the virtual network) or Fig. 17 (preemption among virtual networks). Naturally, in less complicated systems, one could not perform a preemption at all, but one could simply reject the session establishment request or put the session establishment request on hold for a certain time period. In this case, this would have to be notified to the source terminal using information additionally included in the session establishment request.

In case of a successful new session, the access controller 170 is furthermore configured for intercepting a session establishment reply which is received in response to the earlier forwarding session establishment request. In view of the intercepted session establishment reply, the access controller updates the data record by reducing the available bandwidth for the virtual network and the quality of service class by the requested amount for this session. This can be done either by retrieving information from the session establishment reply indicating the bandwidth consumed by this session or it can be done by storing the required bandwidth included in the session establishment request and by then matching the received session establishment reply to the corresponding session establishment request in order to find out the consumed bandwidth for the new session. Then, the available bandwidth for this virtual network in the data record is newly calculated by subtracting the required bandwidth for the new session and quality of service class and, then, the access controller is again ready for intercepting a further session establishment request. Naturally, in case of a session termination, such a session termination communication could also be intercepted by the access controller 170 of Fig. 1 so that the access controller can again update the data record by increasing the amount of available bandwidth by the amount of a terminated session, i.e., since this amount is again free. Alternatively or additionally, sessions are provided with pre-defined lifetimes and, in case a session is not refreshed, then the session is terminated. This can also be signaled, for example, by a network controller or so, but alternatively, the access controller could also keep, within the data record, a lifetime and an indication whether a certain session has been refreshed or not so that the access controller can automatically update the data record by increasing the available bandwidth when an earlier existing session has been terminated either intentionally or by a time-out.

Fig. 5 illustrates a more detailed embodiment of the network system comprising the access controller 170 and the physical transport network 120. Particularly, the physical transport network comprises a plurality of label edge routers 125, 126 and a plurality of label switch routers 127, 128. Only the label edge routers provide an ingress/egress point from the physical transport network and, therefore, the access controller 170 is connected to the label edge routers 125, 126, but is not directly connected to a label switch router 127, 128, etc. Furthermore, the physical transport network comprises a controller which may be implemented in a distributed or centralized way, and this controller 129 operates as the network management system/operational support system (NMS/OSS). The controller 129 is configured to have a connection to the access controller 170 and this controller can also be connected to different virtual network controller VN1, VN2, indicated at 130, 131. Particularly, the controller 129 is configured to initialize the quality of service policy in the tunneling domain, i.e., in the domain made up by the LER and LSR and the corresponding connections. Furthermore, the controller 129 is adapted to configure the access controller 170 by providing information on the data record to the access controller such as the transport network QoS policy.

Furthermore, as illustrated at 130 and 131, the network furthermore comprises a first virtual network controller for the first virtual network and the second virtual network controller for the second virtual network and each virtual network controller is adapted for instructing the controller or the access controller to hold the information on the available bandwidth in the data record for the specific virtual network.

Fig. 6 furthermore illustrates an implementation of the access controller 170. Particularly, the access controller comprises the memory/stored data record 171 and, additionally, in this implementation, a processor/control unit 179 and a programmable switch 178 connecting an input and an output of the access controller. The processor/control unit 179 is configured to intercept messages received at the programmable switch such as incoming session establishment requests or incoming session termination requests. Furthermore, the processor 179 is configured to perform a session admission in case of available bandwidth or to perform a preemption algorithm or to actually execute instructions received from a different preemption controller.

Furthermore, the processor/control unit controls the start of the first session in the first virtual network and the second session in the second virtual network using the data record 171 which comprises, for each virtual network the information on the available bandwidth for the corresponding virtual network.

Subsequently, reference is made to Fig. 8, illustrating the situation of existing network scenarios. Typically, an MPLS bandwidth constraint model such as MAM (Maximum Allocation Model) or RDM (Russian Doll Model) admits traffic based on an available bandwidth for a particular quality of service class. However, such a model/network is not equipped to distinguish from which virtual network (VN) this traffic is coming from. There might be a situation that traffic from one virtual network might be admitted into the resources of another virtual network. Typically, such a scenario which is the scenario of a straightforward physical transport network 120 allows, in this implementation, QoS classes, C0 to CN as illustrated in the table. Again, an MPLS switching domain with label edge routers (LER) and label switch routers (LSR) as illustrated, in several user equipments, are illustrated such as user equipment 150 and user equipment 151. There are, specifically, specific user equipments such as 152 or 153 which are configured to operate in two different virtual networks.

As an example referring to Fig. 9, there is an MPLS domain maximum bandwidth for C1=10, the available bandwidth is 3 right now and for a first virtual network there is the C1 maximum bandwidth equal to 6, and, therefore, the available bandwidth is equal to 0. For another virtual network C1 QoS class, the maximum bandwidth is 4 and the available bandwidth is 3. Then, C1 traffic of bandwidth 3 from only the second virtual network should be admitted and traffic in QoS class C1 from the first virtual network should be rejected. However, the MPLS might admit traffic as long as the QoS class is C1 and the traffic does not exceed 3 and it does not matter from which virtual network the traffic is coming from. Therefore, the present invention addresses this problem by providing the access controller as illustrated in Fig. 9. As outlined, the core transport network or physical transport network 120 may consist of one or multiple label switching base transport, e.g. multi-protocol label switching (MPLS) switching domains [12], [10]. This physical transport network is also named a "tunneling domain" (TD). Furthermore, the access controllers 170, for example illustrated in Fig. 9 are attached to the ingress points such as LER to the tunneling domain, where LER is an MPLS label edge router. An access controller 170 may have two functionalities. An access control module (ACM) functionality and the functionality of switching of session data by the programmable switches (PS). The ACD could be implemented as a software-defined networks (SDN) [5] domain by using OpenFlow protocol [4] between the ACM and the PS. or other.

Subsequently, Fig. 10a illustrating a centralized NMS/OSS and Fig. 10b illustrating a distributed NMS/OSS controller is discussed. The initial setup and configuration of a transport network is done by the network management system/operating system support controller 129 already illustrated in Fig. 5. In the scenario of Fig. 10a, the TD and the ACD domains are contained in a single administrative domain, thus their administration can be performed by a single network management system (NMS)/operational support system (OSS). In the other implementation of Fig. 10b, which is the "multi-admin" configuration, the TD and ACD domains each have their own administration, thus multiple NMS/OSS are involved. Therefore, even though the access controller 170 and the controller 129 are illustrated as separate elements in Fig. 5, those two elements can also be implemented with one and the same controller instance. Therefore, the illustration in Fig. 5 for example and in the other figures is to be understood as illustrating functionalities other than the preferred implementation. Naturally, how all the functionalities are actually realized either in a single workstation or in a plurality of workstations located at different places is a matter of design.

In a "direct" case, messages are sent through the programmable switch, and the "session establishment" and "session termination" messages belong to the "control plane" and these messages are to be actually sent to the control/management agent of the ingress routers (LER) of the TD. Preferably, a command line interface (CLI) between the ACM and the MPLS LER is provided, by which the ACM can then make a request to the LER. Therefore, when the access domain controller receives a Session Establishment Request, it opens up a connection towards the ingress edge router of the tunneling domain such as a command line interface and triggers the path setup signaling (e.g. that the MPLS LER starts to send out an RSVP-TE message).

Hence, the path establishment in the MPLS domain is triggered. Normally, with MPLS, this is done with vendor specific user-network-interfaces towards the LER, thus the SER can be such a specific message. However, it could also be the case that one sends something different (e.g. just the starting packet of a video session) as SER. In this case, the OpenFlow controller could itself talk to the MPLS LER to trigger the path setup.

Independent on the scenario, it is necessary to configure the quality of service settings of the different domains and to coordinate the different configurations. To this end, first the QoS policy of the TD domain will be set up, and then this information is transferred also to the ACD domains. This allows the ACD domain to learn about the QoS policy of the TD domain it is connected to and thus results in the outlined coordination. Depending on the employed scenario, the configuration steps may vary. For the Fig. 10b implementation, the first configuration step is visualized by arrow 1. Here, the NMS/OSS configures the overall QoS policy for the TD domain. The configuration of this quality includes

Bandwidth (BW) allocation model; either the "Maximum Allocation bandwidth constraint Model" (MAM) [6] or the "Russian Doll bandwidth constraint Model" (RDM) [7] or others can be applied here

The amount of QoS classes to be supported

The amount of bandwidth (BW) to be allocated per QoS class (for RDM, combination of classes)

The QoS class identification scheme to be used, i.e. EXP [10] or Label or others

The mapping between non-TD QoS class and the TD switching domains' QoS classes.

After the NMS/OSS has setup the TD domain, it configures the ACD domains in the second step (visualized with the arrow 2 with the following information:

BW allocation model used by the TD domain i.e. MAM or RDM or others

The amount of supported QoS classes

The maximum amount of bandwidth per class (for RDM, combination of classes) In case the RDM bandwidth allocation model is used: what is the pre-emption policy Additionally, the NMS/OSS can let the ACD know how much BW is presently available per QoS class or combination of QoS classes, either periodically, or on request from the controllers (in such a case, the TD switching domain provides this information to the NMS/OSS periodically or upon request from the NMS/OSS); hence, the BW information is provided by the NMS/OSS from the TD domain; Or

Additionally, TD switching domain may let the ACD know about the present BW availability per QoS class/combinations of QoS classes either periodically or on request from ACDs. Therefore, it is the TD domain through other means (not through the NMS/OSS) which provides this information.

For the multi-admin scenario shown in Fig. 10b, the configuration of the TD by the NMS/OSSx follows the one for the single admin scenario. The difference between these scenarios lies in the coordination between the TD and ACDs. This is necessary as the ACDs are under separate administrations (NMS/OSSy,z,...). Two scenarios are possible, TD-ACD direct interaction or through their respective NMS/OSS.

Inter NMS/OSS interaction

The independent NMS/OSSx,y,z have interfaces (I/F) among them (Fig. 10b, arrows 2.a) and can exchange following information and then passed down to their respective ACD (arrow 3)

- Bandwidth (BW) model whether Maximum Allocation Model (MAM) or Russian Doll Model (RDM) or others

- How many QoS classes are supported
- Maximum BW per class (for RDM, combination of classes)
- If RDM, what is the pre-emption policy (optional. The SDN domain may determine it independently)
- Additionally, the NMS/OSSx can let the SDN domains NMS/OSSy,z know how much BW are presently available per QoS classes or combination of QoS classes, either periodically, or on request from the controllers (in such case, the MPLS switching domain provides this info to the NMS/OSSx periodically or upon request from the NMS/OSSx)

If this is the case, NMS/OSSy,z relay these info to the ACD controllers under their administration and connected to the MPLS domain under discussion in this patent.

TD-ACD direct interaction

The following information can be exchanged in between TD and ACDs directly (Fig. 10b, arrows 2.b).

- BW allocation model of the MPLS domain i.e. MAM or RDM or others
- How many QoS classes are supported
- Maximum BW per class (for RDM, combination of classes)
- If RDM, what is the pre-emption policy (optional. ACD can determine it independently also)
- the TD may let the ACDs know how much BW per QoS class/combination of classes are available at present, either periodically, or on request from a ACD

To summarize, through the protocol described above, the ACDs are able to discover the QoS policy of the TD they are connected to.

Therefore, to summarize, the procedures in Fig. 10a and 10b allow three main features. The first is setting of the QoS policy comprising a bandwidth constraint model, the number of QoS classes and the kind of QoS classes to be supported and the maximum available bandwidth for each QoS class. The second feature is the conveying of the tunneling domain QoS policy comprising a bandwidth constraint model, the QoS number and classes supported, the maximum available bandwidth for the QoS classes and virtual network reservation information. The third feature is the virtual network reservation request comprising a bandwidth constraint model, the kind of QoS classes to be supported and the maximum bandwidth for the QoS classes. Examples for QoS classes can be found, for example, in DES-TE or MPLS-TE.

Subsequently, reference is again made to Fig. 9. Fig. 9 illustrates the network system comprising the physical transport network 120 and a plurality of access controllers 170. Particularly, the data records are illustrated, and there are several terminals where, for example, the terminal 152 supports both virtual networks, such as the first virtual network 1 and the second virtual network 2, and the same is true for terminal 153 and all the other terminals support, in this example, only virtual network 1 or, stated differently, are registered to virtual network 1. The data record 171 indicates, for each virtual network an identifier for each QoS class, such as C0 ad C1 and the maximum bandwidth for each class and the currently available bandwidth. Alternatively, the currently used bandwidth could be indicated as well so that the available bandwidth can be calculated from the currently used bandwidth and the maximum bandwidth.

Furthermore, the further data record comprises information for the QoS class C0 and QoS class C1 and all this is stored in the access controller 170. It can be seen from the example in Fig. 9 that the maximum bandwidth for QoS class C0 in both virtual networks is equal to the maximum bandwidth of the QoS class of the transport network in the further data record 172, and that the same is true for the first QoS class C1. Furthermore, the count of available bandwidth also corresponds to the sum of the available bandwidth in each quality of service class. Therefore, the bandwidth for the different QoS classes of the physical transport network is separated into the virtual networks and the corresponding QoS classes in accordance with the QoS policy determined by the MNS/OSS as discussed in Fig. 10a and Fig. 10b.

Now the detailed interactions between the different network elements for the transmission of data over ACD and TD are discussed. As shown in Fig. 12, data communication takes place between a number of source/destination pairs that are connected to ACDs. When a source of virtual network 2 (VN-2) wants to start a session, it sends Session Establishment Request to its desired destination which includes information on the BW this session needs and its QoS class. This Session Establishment Request is intercepted by the PS and forwarded to its ACM. The ACM maintains a table (will be explained later for different BW allocation models) which shows how much BW is available for all QoS classes supported in the TD domain. If the controller does not have this information, it asks the PS or the TD to provide information on the available BW for this QoS class. If enough BW is available VN-2 from which the Session Establishment Request arrived, the ACM asks the PS to admit this session (i.e. forward this Session Establishment Request to the TD and open a 'flow or session entry' which says what the PS would do for the consequent data (e.g. packets) of the session. In this case, the 'flow entry' would say to forward consequent data to TD). TD can have its own admission control procedure by which, this invention is not affected.

The Session Establishment Request travels to the Destination through TD. If successful, a Session Establishment Reply is sent back to the Source. This indicates that resources have been successfully reserved in TD for this Session. The PS may intercept this Session Establishment Reply and convey it to the ACM, before forwarding it to the Source. The ACM, which updated its table for this new session, can now be sure that the update and the instruction it sent to PS for 'session entry' are valid. If a Session Establishment Reply is not received within a certain time, relevant table entries (BW info of the QoS class) would be rolled back to how these were before the Session Establishment Request arrived. ACM will also instruct PS to remove the 'flow entry' for this particular session.

In case not enough BW is available for this virtual network, the reaction of the ACM depends on the bandwidth constraint model chosen by the TD domain:

> If MAM has been chosen, the controller instructs the switch to drop this session i.e. the Session Establishment Request is not forwarded to the TD domain. In addition, the ACM, through the PS, may send a 'resource unavailable' message back to the source.

If RDM has been chosen, the controller needs to check if 'preemption' is necessary, i.e. if a TD session with a lower priority can be dropped. The details of preemption will be explained in the RDM section below.

Fig. 13a and Fig. 13b illustrate the message flow for admitting a session in more detail. As illustrated at 1300, the source sends a session establishment request with a virtual network ID, a QoS class, a priority level as an optional measure and the required bandwidth to the access controller and, exemplarily, to the programmable switch PS of the access controller. This session establishment request is intercepted 1301 and forwarded to the control unit of the access controller. The controlled unit admits the session or not. When the session is admitted, the session establishment request is forwarded to the programmable switch SW as indicated at 1302. Then, this information is forwarded to the tunneling domain by the programmable switch as illustrated by 1303. Then, the tunneling domain either admits the session or not. If the tunneling domain admits the session, the session establishment request is forwarded to the destination as indicated at 1304. Then, a session establishment reply is sent back from the destination to the source via the access controller as illustrated at 1305. Alternatively, the session establishment reply is forwarded to the programmable switch 1306 intercepted by the programmable switch and forwarded to the control unit for updating the data record as illustrated at 1307 and, at the same time or subsequently forwarded to the source as illustrated at 1308. When the session is over, the source may send a session termination request 1309, which is then intercepted by the programmable switch 1310 and the control unit of the access controller then updates the reservation information from the data record suggested to Tables 171 and 172 of Fig. 9 as illustrated at 1311. Then, the session termination request is sent to the tunneling domain through the programmable switch PS as outlined at 1312 and then forwarded to the destination as illustrated at 1313. Then, the destination replies with a session termination reply as illustrated at 1314. In case of the situation that the access controller does not admit the session, i.e., answers with "no" in the block in Fig. 13a, a drop session message 1315 is forwarded to the programmable switch from the control unit of the access controller and an information is sent to the source that the resource is unavailable as illustrated at 1316. When, however, the tunneling domain decides that a session is not admitted for any reason, such as illustrated at the right-hand side of Fig. 13a, then this is signaled from the tunneling domain to the source as illustrated at 1317.

Subsequently, the virtual network setup (VN overall QoS class reservation) is discussed. To this end, reference is made to Fig. 14a and 14b regarding the maximum allocation model and Fig. 16 regarding the Russian doll model.

In the maximum allocation model (MAM) of TD, the BW per QoS class is fixed [6]. Fig. 14a shows an example of three QoS classes, i.e. C0, C1 and C2 which are configured in a TD ingress point e.g. MPLS Label Edge Router (LER) which is connected to an ACD. Note that the number of QoS classes that is supported by the TD domain enforces an upper bound on the QoS classes that the ACD can provide: in this example, a virtual network can get at most three i.e. C0-C2 or some of these QoS classes.

Case 1: MPLS QoS reservation is predetermined

For this case, it is assumed that the number of QoS classes (C0-C2 in this example) and maximum BW per class is predetermined in the TD domain. Thus, requests from the VNs have to be accommodated within the setup in TD domain.

There are 3 VNs asking for resources from the TD switching domain. A VN (a VN will have its own NMS/OSS, so, this VN network setup request will come from VNs NMS/OSS) will mention the QoS classes and per QoS class BW it requires (for example, for VN-2, it is C0(VN-2), C1(VN-2), and C2(VN-2) together with the required BW for each class (the reservations on the left hand side of Fig. 14a). The ACM receiving this request will consult its VN state table (Table 1) of Fig. 14b to see if this request could be met. The requested BW must be below or equal to C0, C1, C2 i.e. the maximum BW available in TD domain at the moment of VN-2 request arrival. If previously accommodated VNs exist, e.g. VN-0 and VN-1, then the requested BW of VN-2 has to be less than or equal to the residual BW of the respective QoS classes. If not enough BW available, the ACM does not accommodate the new VN request i.e. VN-2 in this example. The ACD may issue a 'resource unavailable' message, mentioning for which QoS classes BW are unavailable. The corresponding VN may reduce its requirement and ask ACD again. The relationship of BW requests from VNs and its mapping to the BW provided by the TD has been shown in Fig. 14a.

An overview of the table used by the ACM is given in Fig. 14b.

ACM needs to be equipped either by its NMS/OSS or by manual intervention or on information from VNs from how to identify the followings:

- VN: IP addresses, IP network prefix, specially defined VN ID, L2 addresses, L2.5 addresses, IP ports etc. or a combination of these

- QoS class: IP ports, IP Types-of-Service (TOS) bits, L2 QoS bits, L2 tags, Contents of MPLS label e.g. EXP bits or the labels themselves

- Total BW provided by the TD domain for each QoS class it supports: either by the NMS/OSS this ACM is connected to or by direct advertisement from the TD domain

- Available BW (how much BW available now for a particular QoS class): informed either by the NMS/OSS this ACM is connected to or by direct advertisement from the TD domain or by asking the PS which is the entry point of a session on how much BW are being consumed at present by the QoS class (or other QoS class/classes) of this session asking for an admission.

The table is refreshed either periodically or when a relevant event occurs e.g. the admission request for a new session, end of a session etc.

Case 2: TD domain QoS reservation are done based on VN reservation requests

The BW allocation in the TD domain itself could be determined by the incoming VN reservation request. In this case, the VN reservation request reaches the ACM. The ACM asks the TD domain which QoS classes it needs to support and how much BW is available per QoS class. For example, in Fig. 14a, lets assume the order of VN request arrival is VN-0 -> VN-1 -> VN-2. Therefore, upon receiving VN-0 request for 3 QoS classes of C0 (VN-0), C1 (VN-0), C2 (VN-0) and BW required for each classes, the ACM asks the TD (either through their respective NMS/OSS or directly) to start supporting these 3 QoS classes i.e. C0, C1 and C2 in the TD context, and to reserve the BW VN-0 has asked for these 3 classes.

When a new request arrives, e.g. in the form of VN-1 which also asks for three QoS classes of C0 (VN-1), C1 (VN-1), C2 (VN-1) and BW for each classes, the ACM asks the TD to increase BW for C0, C1 and C2 classes so that VN-1's request could be met. If VN-1 asks for a new class/classes, the ACM will ask the TD to open support for such new classes. The same operation is performed for VN-2 or further new VN requests.

If the TD is unable to accommodate such requests, it issues a 'not possible' reply to the ACM and may explicitly mention the reasons for such inability in accommodating a request. Such reasons could be unavailability of BW, lack of support for the requested QoS classes, non-conformance in administration policy like an authentication failure, unmatched security mechanism, billing problem etc.

The lifetime of a VN reservation request is monitored by the ACM. If a VN cancels a request or if the request's lifetime expires, the ingress ACM instructs the PSs to remove the 'flow entries' relevant to this VN reservation.

In addition, the ACM can send cancellation request to TD to delete a particular reservation. The whole reservation or a part of it (increase/decrease BW of a particular QoS class, addition of a new QoS class) could be changed (cancelled, modified) in this way.

As shown in Fig. 1, 9, 12, the PSs are connected to the ingress/egress points of a TD and traffic sources and destinations are connected to the PSs. When a traffic source of a particular VN wants to create a new session over the TD, the Session Establishment Request is sent from the source to its desired destination.

Subsequently, reference is once again made to Fig. 9, Fig. 10a, 10b, and Fig. 11. As illustrated in these figures and also in Fig. 1, the access controller and, particularly, the programmable switches are connected to the ingress/egress points to a tunneling domain and traffic sources and destinations are connected to the programmable switches. Then a traffic source of a particular virtual network wants to create as new session over the tunneling domain, the session establishment request is sent from the source to its desired destination. When this request arrives at the programmable switch, it is forwarded to the ACM of the programmable switch.

When this request arrives at a PS, it is forwarded to the ACM of the PS. The Session Establishment Request includes information on the desired QoS class and the amount of BW necessary for this session. The ACM consults its VN state table (Table) to check whether enough BW is available for this particular VN and the QoS class to accommodate the request.

- If enough bandwidth is available, the ACM instructs the PS to forward this Session Establishment Request to the TD. From there, the TD is responsible for admitting the session according to its own session admission, forwarding, resource reservation procedure [1~3], [8-9] ..... The ACM which made the decision, updates its VN state table (Table) accordingly, specifically, the column of 'Available BW'. Note that such an update is also performed in case the session is terminated (in that case, 'Available BW' increases) by intercepting Session Termination Reply at PS and forwarded to the ACM.

- If not enough BW is available for the requested session, the ACM instructs the programmable switch to drop the Session Establishment Request, thus it is not forwarded to the TD. In addition, the ACM may itself, or instruct the PS to issue a 'BW unavailable message' to the originating source of the Session Establishment Request to notify the cause of rejection.

In another embodiment, the PS itself can keep statistics [4] for the sessions going through it. It is an option that, when such new Session Establishment request arrives at the ACM, the ACM asks the PS to send information on the 'Available BW' for this particular QoS class of this particular VN. In such case, maintaining the right most column of 'Available BW' in Table 1 at ACM is not necessary.

Besides, the PS, upon receiving a new session establishment request, can proactively forward the available BW info on the particular QoS class of this session from the particular VN, along with forwarding or not forwarding the session establishment request itself. If the PS does not forward the Session Establishment Request itself to the ACM, then it stores the message in its memory until it receives instruction for the controller on what to do with this session establishment request.

Russian Doll Model (RDM) (Fig. 15):

Unlike the MAM, in the RDM bandwidth is allocated to a nested combination of classes [7]. For example, in Fig. 25, the highest priority class C0 is assigned 25% of the overall BW. C1+C0 together get 50%. As C0 has higher priority, in the absence of traffic with class C0, C1 can use all 50%. However, C0 can use at most 25%. If C0 is using 10% and C1 is 45%, and a new session establishment request arrives which requires 5% of the BW, some sessions of C1 need to be deleted to free up 5% BW in order to accommodate the new C0 sessions as these have higher priorities. This procedure of deleting lower priority sessions in order to accommodate higher priority sessions within their allocated BW share is called 'preemption'. At present, there is no standard way of performing preemption and it is solved in a vendor dependent way.

The table in Fig. 16a differs a little compared to Fig. 14b. Now 'Total BW' column stores how much BW has been allocated per combination of classes (nested classes). Assuming a priority of C0 > C1 > C2 in this example, for VN-0, it holds an entry on the Total BW possible to allocate for this VN-0 (which has been reserved based on the VNs request in the first place) in the form of C0, C1+C0 and C2+C1+C0. The 'Available BW' column stores how much BW is available for each particular class, C0, C1 and C2 in this example.

The Available BW can easily be calculated by

$$\text{Available BW (C0)} = \text{Total BW (C0)} - \text{BW in use (C0)}$$

$$\text{Available BW (C1)} = \text{Total BW (C1+C0)} - (\text{BW in use (C0)} + \text{BW in use (C1)})$$

Available BW (C2)= Total BW (C2+C1+C0) – (BW in use (C0) + BW in use (C1)+BW in use (C2))

This scheme can be generalized to m QoS classes as it is also depicted by the VN-m entry in Table (note: 'm' and 'n' are natural numbers).

When a new session is admitted (or deleted), the "Available BW" entry has to be updated accordingly to reflect this changed amount of bandwidth that is now available. The ACM can either maintain the 'Available' column itself or ask the PS which keep its own statistics [4] about the BW usage of the sessions going through the PS. In that case, the ACM mentions the VN ID, destination address and QoS class to PS. The PS then replies back with the BW in use for such sessions for the outgoing link (I/F) towards the destination. The ACM can explicitly mention the outgoing link (I/F) too. In that case, the ACM maintains a network connectivity table (network topology) through which it can determine which one is the outgoing interface on this PS for a particular destination. If the programmable switch is connected to only one ingress point (e.g. MPLS LER), then it is only one outgoing I/F from which the BW in use information is necessary.

If BW is available for this particular VN, QoS class, the ACM instructs the PS to forward this session establishment request to the TD. From there, the TD is responsible for admitting the session according to its own session admission, forwarding, resource reservation procedure [2~3], [8~10]. The ACM which made the decision updates its VN state table (Fig. 16a) accordingly, specifically, the column of 'Available BW'. This is also updated when the session is terminated/ends (in that case, 'BW in use' decreases)

Besides, the PS, upon receiving a new session establishment request, can proactively forward the BW in use/Available BW info on the particular QoS class of this session from the particular VN, along with forwarding or not forwarding the session establishment request itself. If the PS does not forward the session establishment request itself to the ACM, then it stores the message in its memory until it receives instruction for the controller on what to do with this session establishment request. It can also keep a copy of the message before forwarding it to the controller.

In the absence of a higher priority QoS class traffic, its residual BW can be consumed by lower priority QoS classes as outlined for the example shown in Fig. 15. However, if a new session arrives for the higher priority QoS class, appropriate number of sessions from lower priority QoS classes have to be deleted/teared down in order to free up enough BW to for the higher priority QoS class. As multiple VNs are using the same TD, preemption must be performed within the same VN class. ACM performs this task.

When a new session establishment request arrives at the ACM, as explained above, it checks if preemption is necessary within the VN. The ACM checks the VN ID to determine which VN it is coming from. It consults Fig. 16a (Table) to determine if a preemption is necessary. Lets assume a C0 session has arrived from VN-0. After consulting the table, the ACD controller finds out that one/some C1 sessions from VN-0 need to be preempted. The controller then executes the preemption in any of the / or a combination of the following ways:

i Instruct the programmable switch to drop sessions from C1 which matches the VN ID (e.g. IP source/destination address), QoS class ID (e.g. IP source/destination port, IP TOS bits, MPLS EXP bits, MPLS labels etc.). As these sessions are going through the PS to the TD, the PS stops the forwarding of packets that match the above criteria to the connected TD e.g. MPLS LERs.

ii Although this mechanism hinders packets of that session from entering the TD, the TD resources are still reserved for a certain time. To remove this reservation, there are multiple possibilities. First, we can exploit the fact that TD reservations [8-9] have a timeout period. When the LER does not see packets of a particular session for certain time, it removes the BW reservation for that session. The session also have lifetime and if it is not refreshed before expiring, the reservation state is also removed. Therefore, resources are automatically freed depending on which timeout occurs first.

As the switch stores session statistics, the ACM can ask the switch to know the lifetime of the session and from this info, can determine when the C1 sessions reservation will expire.

For the information on timeout period due to absence of packets, the TD can let the ACD know either directly through the PS or its corresponding NMS/OSS systems.

In both the cases, the new session can be admitted as soon as the timeouts occur. The ACM may wait for a certain time before admitting the new session in question so as to avoid concurrent conflicting session requests.

Besides freeing of TD resources based on the timeout, the ACD can also actively trigger it. To this end, the ACD issues a 'Remove Session Reservation State' message via the PS towards the LER that is directly connected with this PS and which serves as the ingress point to the TD. This message instructs the LER to remove the C1 sessions and the LER will furthermore forward the message to the relevant TD switches along the way to the destination. Here, the ACD acts as a TD switch to the TD which has the right to issue TD control messages. The ACD and the TD, in such case, need an appropriate security association which have been explained in [11], [12]. The address of the PS is used as the originator address of the 'Remove Session Reservation State'. Therefore, the acknowledgement (ACK) message is sent back to the PS on removing the reservations in the TD, which is forwarded to the ACM by the PS.

Upon receiving such ACK message, the ACM then admits the new session request, in this example, the C0 session request. Issuing explicit reservation removal, as explained in this step, frees up the desired resources faster than timeout based approach explained in ii.

- Upon removing i.e. pre-empting some sessions, the ACM through the PS, or the TD LER may send a 'Resource Unavailable' message [8-9] to the sources of the pre-empted sessions.

Subsequently, Fig. 17 is described. Fig. 17 illustrates a preemption among the natural networks. This can be useful for increasing the bandwidth usage efficiency. In such cases, there is a priority level among the virtual networks or some of the virtual networks. It is also possible to alternatively or additionally set priorities among different QoS classes which belong to different virtual networks. In such an extension, the information illustrated in Fig. 17 is to be maintained at the access control domain in addition to the table of Fig. 16a. For the inter-virtual network priority case, the prioritization of the virtual networks is required such as virtual network 1 has a higher priority than virtual network 0 which again has a higher priority compared to virtual network 7 which again, for example, has a higher priority than virtual network n. In this case, for example, our QoS classes of virtual network 0 have a higher priority than all QoS classes of virtual network 7. It can be said that each C0 is the highest and C2 is the lowest priority class in the whole MPLS (tunneling domain or physical transport network), then C0 of virtual network 7 can be preempted to admit C0 over C2 of virtual network 0.

One alternative and all additional features is the inter VN QoS class priority case. Here, it can be said that, for example, C0 of virtual network 1 has a higher priority than C2 of virtual network 0 which has a higher priority than C1 of virtual network 7, which again has a higher priority of compared to C1 of virtual network 1. Hence, a priority level can be set for each QoS class in each virtual network for all the QoS classes over all virtual networks.

One example of the usage of such a scenario is giving a higher priority to the virtual networks paying higher. The costs can be set on per QoS class also where the second case will come to use.

Figs. 18 and 19 illustrate different preemption sequences, and these sequences will subsequently be discussed. Reference is again made, with respect to the notation, to, for example, Fig. 9. In step 1801, the source sends a session establishment request to the access controller and this request is intercepted 1802 and forwarded to the control unit of the access controller. The access controller then decides whether a preemption is necessary. If a preemption is not necessary, control proceeds as illustrated in Fig. 13a, 13b. When, however, a preemption is necessary, then the control unit proceeds with selecting preemption candidate sessions as illustrated at 1803. Then, a request for statistics of the preemption candidate sessions takes place as illustrated in 1804, where these statistics are held by a programmable switch. The programmable switch then sends back the statistics as illustrated at 1805 and, based on the these statistics, the access controller selects the preemption sessions as illustrated at 1806. Then, a message goes from the control unit to the programmable switch as illustrated at 1807 and, then, the programmable switch drops the sessions with instructed session ID. The programmable switch will drop the sessions (1808). announced in the DROP message Then, a message goes to the source that these sources are unavailable for the dropped sessions as illustrated in 1809. Furthermore, the access control domain forwards the session establishment request for the sessions, for which room has been made to the programmable switch as illustrated at 1810 and the programmable switch then forwards this information to the tunneling domain as illustrated at 1811 and from that the session establishment request goes to the destination as illustrated at 1812 and, then, the destination replies with the session establishment reply as illustrated at 1813.

In the other preemption sequence illustrated in Fig. 19, the procedure proceeds in the same manner until block 1807. However, then the ACM sends via the PS a remove session reservation state information to the tunneling domain as illustrated at 1814. Then, the sessions with the instructed session ID are dropped as illustrated at 1808. Furthermore, the tunneling domain sends an acknowledgement that a session reservation is removed as illustrated at 1815, and then a resource unavailable message goes from the PS to the source as illustrated at 1816 or from the tunneling domain as illustrated at 1817, and the other steps 1810 to 1813 proceed as in Fig. 18.

As discussed earlier, the whole network system is to be initialized before starting the first operation or when the rescheduling takes place. The procedures for initializing the network are illustrated in Fig. 11, where the notation again refers back to Fig. 10a and Fig. 10b. Furthermore, reference is made to Fig. 5. VN in Fig. 11 stands for the virtual network controllers 130 or 131, NMS/OSS stands fort he controller 129, the tunneling domain is implemented by block 120 and, particularly, the switches and connections 125-128, and the access control domain is represented in Fig. 5 by the access controller 107.

In a first step 1100, the controller 129 sends a said QoS policy instruction to the tunneling domain, and the tunneling domain replies with a confirmation/acknowledgement message 1101. Then, the controller 129 conveys the tunneling domain QoS policy to the access controller 170 (access control domain). Then, in response to this message 1102, the access controller opens a first entry for the tunneling domain QoS information in the data record, and this entry corresponds to the further data record 12 of Fig. 3, for example, as illustrated at 1103. Then, the virtual network controller 130 for example for virtual network 1 makes a virtual network reservation request 1104, and this request is forwarded from the NMS/OSS 129 to the access controller 170 as illustrated at 1105 so that the access control domain/access controller 170 can open an entry for this virtual network such as the tables in Fig. 14b or 16b or the corresponding tables in Fig. 9 or Fig. 3. Such an entry then starts with a virtual network identifier, a QoS class identifier, a total bandwidth indicator and a current bandwidth indicator. Naturally, in the very beginning, the current bandwidth indicator may be set to zero.

Then, the access controller replies with message 1106 to the central controller 129 and the central controller then feeds back this information to the virtual network controller 130 or 131 initially starting with message 1104 as illustrated at 1107. As illustrated in Fig. 11, an alternative procedure for messages 1104 to 1107 can be a direct communication from the virtual network controller 130, 131 to the access controller and vice versa as illustrated by arrows between blocks 130/131 and 170 so that the central controller 129 or the tunneling domain will not have to start a certain communication.

Subsequently, further aspects and embodiments are described. In an implementation, a network systems consists of a software defined network consisting of programmable switches and decision making controllers, a label switching based tunneling transport protocol domain (tunneling domain), a network management entity, traffic source in destinations in virtual networking environments, where traffic sources and their corresponding destinations on one virtual network is isolated by node virtualization procedures, where the software defined network domain is connected to the ingress points of the tunneling domain and where the software defined network domain performs an admission control for sessions generating from traffic sources to conform with the QoS policy of the tunneling domain.

A further aspect of the present invention relates to a network management (NMS/OSS) system or a plurality of network management system which sets up QoS provisioning policy of the tunneling domain and the software defined network domain so that the SDN domain receives tunneling domains QoS provisioning policy information.

A further aspect of the present invention relates to a method comprising a session establishment request generation step from a traffic source, a session admission request interception step in the SDN domain, a session admission decision step at the SDN domain, a session admission request forwarding step to the tunneling domain/session admission request drop step at the SDN domain.

This method may include a notification of a session admission drop step to the source of the traffic.

A further aspect relates to a table at the SDN domain which maintains record of QoS classes reserved, the per QoS class maximum available bandwidth and the per QoS class bandwidth usage at a certain time, and this table exists for each virtual network in the network system.

The data record may additionally include QoS classes supported in the tunneling domain, a per QoS class/combination of QoS classes maximum usable or reservable bandwidth in the tunneling domain, a per QoS class/combination of QoS classes available bandwidth at a certain time, priority levels of each QoS class, priority levels of sessions inside a single QoS class, priority levels among virtual networks or priority levels among all sessions without any regard to which virtual networks they belong to, particularly in order to realize preemption of a lower priority session of a virtual network for a higher priority session of another virtual network.

The session admission decision step as discussed before may comprise an identification of the virtual network which has performed the session establishment generation step by a predefined virtual network ID by the MNS/OSS, the QoS class of the session, necessary bandwidth of the session and the destination of the session.

The session admission decision 7 may also comprise finding out matching entries for the IDs from the data record and checking how much bandwidth is available for the QoS class found.

A further implementation of the session admission decision step also comprises forwarding session establishment requests to the tunneling domain when enough bandwidth is found or to drop the session establishment request if not enough bandwidth is found.

A further aspect of the present invention is a virtual network reservation request to the SDN domain (or NMS/OSS), which comprises of a virtual network sending a virtual network reservation request to the SDN domain which includes the QoS classes this virtual network requires, priority levels and a necessary bandwidth for the corresponding QoS classes.

A virtual network reservation admission method at the SDN is furthermore an aspect of the present invention, where the SDN domain decides whether to admit or not admit the network reservation request by comparing it against available QoS classes and bandwidths in the MPLS domain. When the MPLS domain has more bandwidth for all QoS classes this virtual network controller is asking for, the virtual network reservation request is admitted and a new entry for this virtual network is opened in the data record of the access controller.

If the SDN domain decides not to admit a virtual network reservation request, it issues a "resource unavailable" reply to the requesting virtual network controller. The "resource unavailable" message may include for which QoS classes how much bandwidth was unavailable. Then, the virtual network controller has the chance to start a new request with updated bandwidth requests in QoS classes in response to the information received from the access controller in order to finally end up with a further virtual network established.

A further aspect of the present invention relates to a preemption method in the SDN domain (access controller domain) consisting of a step to determine which low priority QoS session group from a particular virtual network is to be preempted, where a further step is to collect bandwidth consumption information on the previously mentioned QoS session group, and a further step is to determine which of the sessions should be preempted in order to accommodate the bandwidth request of a higher priority session, and a further step comprises instructing a data forwarding switch to drop the sessions selected.

A further implementation of the preemption method can include setting up priority levels among virtual networks where sessions from a lower priority virtual network can be preempted to admit sessions from a higher priority virtual network. A further embodiment of the preemption method may include setting up priority levels to the QoS classes across virtual networks where a lower priority QoS class in the virtual network can be preempted to accommodate a higher priority QoS class in another virtual network.

A further aspect of the present invention relates to a preemption notification method, where the access controller or SDN domain, upon taking a decision on preemption generates a preemption notification message to the tunneling domain based on which the recipients which is in the tunneling domain remove resource reservation state for the sessions mentioned in the preemption notification message.

A further aspect of the present invention is a session removal notification method, where the SDN domain generates a session removal notification message to the sources of the sessions decided in the preemption method to be preempted.

A further aspect of the present invention is a trust relationship establishment method between the SDN, and the tunneling domain so that the SDN domain can send control messages to the tunneling domain which are valid in the context of the tunneling domain. This trust relationship establishment may comprise a key exchange or any other cryptographic or authentication protocol.

A further aspect of the present invention relates to a network system consisting of an access control domain, a label switching based tunneling transport protocol domain (tunneling domain), a network management entity, traffic sources and traffic destinations in a virtual network environment, the traffic sources and their corresponding destinations are in one virtual network which is isolated by a node virtualization technology, where the access control domain such as the access controller is connected to the ingress points of the tunneling domain, and where the access control domain performs an admission control for sessions generated from traffic sources to insure conformance with the QoS policy of the tunneling domain.

The access control domain of this network system may consist of access control modules which maintain the logic of admission control and changing session state to the tunneling domain, and programmable switches (PS), which switch session data according to the instruction from the access control modules.

The access control domain of this network system may furthermore comprise software defined network (SDN) controllers and SDN switches, where SDN controllers maintain the logic of admission control and changing session state to the tunneling domain, and SDN switches which switch session data according to the instructions from the SDN controller.

The access controller/ACD of the network system may comprise OpenFlow (OF) controllers and OF switches, where OF controllers maintain the logic of admission control and changing session state to the tunneling domain, and the OF switches switch session data according to the instructions from the OF controllers.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a BD, DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory storage medium or a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] E. Rosen et al., "Multiprotocol Label Switching Architecture," RFC 3031, IETF, Jan 2001.

[2] D. Awduche et al., "Requirements for Traffic Engineering Over MPLS," RFC 2702, IETF, Sept 1999.

[3] F. Le Faucheur, Ed, "Protocol Extensions for Support of Diffserv-aware MPLS Traffic Engineering," RFC 4124, IETF, Jun 2005.

[4] Open Networking Foundation (ONF), "OpenFlow Switch Specification Version 1.3.0," www.opennetworking.org, Jun 2012

[5] IRTF, "Software-Defined Network Research Group (SDNRG)," http://irtf.org/sdnrg

[6] F. Le Faucheur et al., "Maximum Allocation Bandwidth Constraints Model for Diffserv-aware MPLS Traffic Engineering," RFC 4125, IETF, Jun 2005.

[7] F. Le Faucheur, Ed., "Russian Dolls Bandwidth Constraints Model for Diffserv-aware MPLS Traffic Engineering," RFC 4127, IETF, Jun 2005.

[8] R. Braden, Ed. et al., "Resource ReSerVation Protocol (RSVP)," RFC 2205, IETF, Sept 1997.

[9] D. Awduche et al., "RSVP-TE: Extensions to RSVP for LSP Tunnels," RFC 3209, IETF, Dec 2001.

[10] F. Le Faucheur, Ed. et al., "Multi-Protocol Label Switching (MPLS) Support of Differentiated Services"' RFC 3270, IETF, May 2002.

[11] F. Baker et al., "RSVP Cryptographic Authentication," RFC 2747, IETF, Jan 200.

[12] R. Braden et al., "RSVP Cryptographic Authentication -- Updated Message Type Value," RFC 3097, IETF, Apr 2001.

## Claims

1. Network system, comprising:

   a physical transport network (120) for transporting data for a session between two terminals; and
   an access controller (170) connected between a source terminal and the physical transport network, wherein the access controller is configured for controlling a start of a first session in a first virtual network and a start of a second session in a second virtual network using a data record (171) comprising, for each virtual network, information on an available bandwidth for the virtual network,

   wherein the first virtual network is configured to provide a first plurality of quality of service classes (129),
   wherein the second virtual network is configured to provide a second plurality of quality of services classes (122),
   wherein the physical transport network is configured to provide a plurality of transport quality of service classes (120),
   wherein the access controller (170) is configured to control the start of the first session or the second session using information on an available bandwidth for a specifically requested quality of service class for the corresponding virtual network,
   wherein the data record (171) further comprises, for each virtual network, information on an available bandwidth for each quality of service class of the first and second pluralities of quality of service classes, and
   wherein, for each quality of service class, a sum of maximum bandwidths for all virtual networks is smaller than or equal to a maximum bandwidth of the corresponding transport quality of service class.

2. Network system of claim 1,
   wherein the data record (171) comprises a stored table comprising, for each virtual network, a virtual network identification (171a), a quality of service class identification (171b), information on a total bandwidth for each quality of service class (171c), or information (171d) on a currently available or currently used bandwidth for each quality of service class.

3. Network system of one of the preceding claims,
   wherein the access controller (170) is configured:

   to intercept (173) a session establishment request from the source terminal, the session establishment request comprising a virtual network identification identifying the first virtual network, a required bandwidth for this session and a required quality of service class,
   to check (174) whether the required bandwidth for this session and the required quality of service class is available, using the data record, and
   to forward (175) the session establishment request to the physical transport network, in case the bandwidth is available.

4. Network system of claim 3, wherein the access controller (170) is furthermore configured for intercepting a session establishment reply in response to the forwarded session establishment request and for updating the data record by reducing the available bandwidth for the virtual network and the quality of service class by the requested amount for this session.

5. Network system of one of the preceding claims,
   wherein the access controller (170) is configured:

   to intercept (173) a session establishment request from the source terminal, the session establishment request comprising a virtual network identification identifying the first virtual network, a required bandwidth for this session and a required quality of service class,
   to check (174) whether the required bandwidth for this session and the required quality of service class is available, using the data record, and
   in case not enough bandwidth is available for the first virtual network and the quality of service class, to perform (176) a preemption algorithm for selecting and terminating a different session in the first virtual network without influencing any session in the second virtual network.

6. Network system of one of the preceding claims,
   wherein the access controller (170) is configured:

to intercept (173) a session establishment request from the source terminal, the session establishment request comprising a virtual network identification identifying the first virtual network, a required bandwidth for this session and a required quality of service class,
to check (174) whether the required bandwidth for this session and the required quality of service class is available, using the data record, and
wherein the virtual network or the quality of service classes are prioritized, and in case not enough bandwidth is available, the access controller is configured to perform (176) a preemption algorithm for selecting and terminating a different session belonging to a virtual network or quality of service class having the same or a lower priority in either the first virtual network or the second virtual network or in both virtual networks.

**7.** Network system of one of the preceding claims, wherein the physical transport network comprises a plurality of label edge routers (125, 126) and a plurality of label switch routers (127, 128) connected to each other with data lines, and wherein the access controller (170) is connected between a label edge router of the physical transport network and the source terminal.

**8.** Network system of claim 7,
wherein the access controller (170) is configured to open up a connection towards an ingress label edge router of the physical transport network such as a command line interface, and to trigger a labeled tunnel path signaling for a communication across the physical transport network.

**9.** Network system of one of the preceding claims,
wherein the access controller (170) comprises a programmable switch (178), a processor (179) for generating a control signal for the programmable switch, and a memory (171) for storing the data record.

**10.** Network system of one of the preceding claims,
wherein the access controller (170) is configured to be connected between the terminals of the network system and the physical transport network so that there does not exist any terminal directly connected to the physical transport network,
wherein the access controller (170) is implemented as a centralized controller or in a distributed manner.

**11.** Network system of one of the preceding claims,
wherein the physical transport network (120) comprises a tunneling domain and a distributed or centralized controller (129) implemented as network management system/operational support system,
wherein the controller (129) is configured to initialize (1100) the quality of service policy in the tunneling domain,
wherein the controller (129) is adapted to configure (1102, 1105) the access controller by providing information on the data record to the access controller,
wherein the network system furthermore comprises a first virtual network controller (130) for the first virtual network and a second virtual network controller (131) for the second virtual network, and
wherein each virtual network controller is adapted for instructing (1104, 1108) the controller or the access controller to hold the information on the available bandwidth in the data record for the specific virtual network.

**12.** Network system of one of the preceding claims,
wherein the access controller (170) is furthermore configured to hold a further data record (172) describing a quality of service policy of the physical transport network, the quality of service policy comprising information on quality of service classes supported by the physical transport network and information on an available bandwidth for each quality of service class of the physical transport network.

**13.** Access controller connectable between a source terminal and a physical transport network, comprising:

a memory (121) for storing a data record comprising, for each virtual network, information on an available bandwidth for the virtual network; and
a control unit (179) configured for controlling a start of a first session in a first virtual network and a start of a second session in a second virtual network using the data record,

wherein the first virtual network is configured to provide a first plurality of quality of service classes (129),
wherein the second virtual network is configured to provide a second plurality of quality of services classes (122),
wherein the physical transport network is configured to provide a plurality of transport quality of service classes (120),
wherein the control unit (179) is configured to control the start of the first session or the second session using information on an available bandwidth for a specifically requested quality of service class for the corresponding virtual network,
wherein the data record (171) further comprises, for each virtual network, information on an available bandwidth for each quality of service class of the first and second pluralities of quality of service classes, and
wherein, for each quality of service class, a sum of maximum bandwidths for all virtual networks is smaller than or equal to a maximum bandwidth of the corresponding transport quality of service class.

**14.** Access controller in accordance with claim 13,
wherein the access controller is configured:

to intercept (173) a session establishment request from the source terminal, the session establishment request comprising a virtual network identification identifying the first virtual network, a required bandwidth for this session and a required quality of service class,
to check (174) whether the required bandwidth for this session and the required quality of service class is available, using the data record, and
in case not enough bandwidth is available for the first virtual network and the quality of service class, to perform (126) a preemption algorithm for selecting and terminating a different session in the first virtual network without influencing any session in the second virtual network.

**15.** Access controller in accordance with claim 13,
wherein the access controller is configured:

to intercept (173) a session establishment request from the source terminal, the session establishment request comprising a virtual network identification identifying the first virtual network, a required bandwidth for this session and a required quality of service class,
to check (174) whether the required bandwidth for this session and the required quality of service class is available, using the data record, and
wherein the virtual network or the quality of service classes are prioritized, and in case not enough bandwidth is available, the access controller is configured to perform (176) a preemption algorithm for selecting and terminating a different session belonging to a virtual network or quality of service class having the same or a lower priority in either the first virtual network or the second virtual network or in both virtual networks.

**16.** Method of operating a network system comprising a physical transport network for transporting data for a session between two terminals and an access controller connected between a source terminal and the physical transport network, or for operating an access controller, comprising:

storing a data record comprising, for each virtual network, information on an available bandwidth for the virtual network; and
controlling a start of a first session in a first virtual network and a start of a second session in a second virtual network using the data record,

wherein the first virtual network is configured to provide a first plurality of quality of service classes (129),
wherein the second virtual network is configured to provide a second plurality of quality of services classes (122),
wherein the physical transport network is configured to provide a plurality of transport quality of service classes (120),
wherein the controlling comprises controlling the start of the first session or the second session using information on an available bandwidth for a specifically requested quality of service class for the corresponding virtual network,
wherein the data record (171) further comprises, for each virtual network, information on an available bandwidth for each quality of service class of the first and second pluralities of quality of service classes, and
wherein, for each quality of service class, a sum of maximum bandwidths for all virtual networks is smaller than or equal to a maximum bandwidth of the corresponding transport quality of service class.

**17.** Computer program for performing, when running on a computer or processor, a method of claim 16.

**Patentansprüche**

**1.** Netzsystem, das folgende Merkmale aufweist:

ein physisches Transportnetz (120) zum Transportieren von Daten für eine Sitzung zwischen zwei Endgeräten; und

eine Zugriffssteuerung (170), die zwischen ein Quellenendgerät und das physische Transportnetz geschaltet ist, wobei die Zugriffssteuerung zum Steuern eines Starts einer ersten Sitzung in einem ersten virtuellen Netz und eines Starts einer zweiten Sitzung in einem zweiten virtuellen Netz unter Verwendung einer Datenaufzeichnung (171) ausgebildet ist, die für jedes virtuelle Netz Informationen über eine verfügbare Bandbreite für das virtuelle Netz aufweist,

wobei das erste virtuelle Netz ausgebildet ist, um eine erste Mehrzahl von Dienstgüteklassen (129) bereitzustellen, wobei das zweite virtuelle Netz ausgebildet ist, um eine zweite Mehrzahl von Dienstgüteklassen (122) bereitzustellen, wobei das physische Transportnetz ausgebildet ist, um eine Mehrzahl von Transport-Dienstgüteklassen (120) bereitzustellen,
wobei die Zugriffssteuerung (170) ausgebildet ist, um den Start der ersten Sitzung oder der zweiten Sitzung unter Verwendung von Informationen über eine verfügbare Bandbreite für eine speziell angeforderte Dienstgüteklasse für das entsprechende virtuelle Netz zu steuern,
wobei die Datenaufzeichnung (171) ferner für jedes virtuelle Netz Informationen über eine verfügbare Bandbreite für jede Dienstgüteklasse der ersten und der zweiten Mehrzahl von Dienstgüteklassen aufweist, und
wobei für jede Dienstgüteklasse eine Summe maximaler Bandbreiten für alle virtuellen Netze kleiner oder gleich einer maximalen Bandbreite der entsprechenden Transport-Dienstgüteklasse ist.

**2.** Netzsystem gemäß Anspruch 1,
bei dem die Datenaufzeichnung (171) eine gespeicherte Tabelle aufweist, die für jedes virtuelle Netz eine Virtuelles-Netz-Identifizierung (171a), eine Dienstgüteklasse-Identifizierung (171b), Informationen über eine Gesamtbandbreite für jede Dienstgüteklasse (171c) oder Informationen (171 d) über eine momentan verfügbare oder momentan verwendete Bandbreite für jede Dienstgüteklasse aufweist.

**3.** Netzsystem gemäß einem der vorherigen Ansprüche,
bei dem die Zugriffssteuerung (170) ausgebildet ist:

um eine Sitzungsaufbau-Anforderung von dem Quellenendgerät abzufangen (173), wobei die Sitzungsaufbau-Anforderung eine Virtuelles-Netz-Identifizierung, die das erste virtuelle Netz identifiziert, eine erforderliche Bandbreite für diese Sitzung und eine erforderliche Dienstgüteklasse aufweist,
um unter Verwendung der Datenaufzeichnung zu prüfen (174), ob die erforderliche Bandbreite für diese Sitzung und die erforderliche Dienstgüteklasse verfügbar ist, und
um in dem Fall, dass die Bandbreite verfügbar ist, die Sitzungsaufbau-Anforderung an das physische Transportnetz weiterzuleiten (175).

**4.** Netzsystem gemäß Anspruch 3, bei dem die Zugriffssteuerung (170) ferner zum Abfangen einer Sitzungsaufbau-Antwort ansprechend auf die weitergeleitete Sitzungsaufbau-Anforderung und zum Aktualisieren der Datenaufzeichnung durch Reduzieren der verfügbaren Bandbreite für das virtuelle Netz und der Dienstgüteklasse um die erforderliche Menge für diese Sitzung ausgebildet ist.

**5.** Netzsystem gemäß einem der vorherigen Ansprüche,
bei dem die Zugriffssteuerung (170) ausgebildet ist:

um eine Sitzungsaufbau-Anforderung von dem Quellenendgerät abzufangen (173), wobei die Sitzungsaufbau-Anforderung eine Virtuelles-Netz-Identifizierung, die das erste virtuelle Netz identifiziert, eine erforderliche Bandbreite für diese Sitzung und eine erforderliche Dienstgüteklasse aufweist,
um unter Verwendung der Datenaufzeichnung zu prüfen (174), ob die erforderliche Bandbreite für diese Sitzung und die erforderliche Dienstgüteklasse verfügbar ist, und
um in dem Fall, dass nicht ausreichend Bandbreite für das erste virtuelle Netz und die Dienstgüteklasse verfügbar ist, einen Präemptionsalgorithmus zum Auswählen und Abschließen einer unterschiedlichen Sitzung in dem ersten virtuellen Netz durchzuführen (176), ohne eine Sitzung in dem zweiten virtuellen Netz zu beeinflussen.

**6.** Netzsystem gemäß einem der vorherigen Ansprüche,
bei dem die Zugriffssteuerung (170) ausgebildet ist:

um eine Sitzungsaufbau-Anforderung von dem Quellenendgerät abzufangen (173), wobei die Sitzungsaufbau-Anforderung eine Virtuelles-Netz-Identifizierung, die das erste virtuelle Netz identifiziert, eine erforderliche Bandbreite für diese Sitzung und eine erforderliche Dienstgüteklasse aufweist,
um unter Verwendung der Datenaufzeichnung zu prüfen (174), ob die erforderliche Bandbreite für diese Sitzung und die erforderliche Dienstgüteklasse verfügbar ist, und
wobei das virtuelle Netz oder die Dienstgüteklassen priorisiert ist/sind, und in dem Fall, dass nicht ausreichend Bandbreite verfügbar ist, die Zugriffssteuerung ausgebildet ist, um einen Präemptionsalgorithmus zum Auswählen und Beenden einer unterschiedlichen Sitzung, die zu einem virtuellen Netz oder einer Diensfigüteklasse mit der gleichen oder einer geringeren Priorität gehört, in entweder dem ersten virtuellen Netz oder dem zweiten virtuellen Netz oder in beiden virtuellen Netzen durchzuführen (176).

**7.** Netzsystem gemäß einem der vorherigen Ansprüche, bei dem das physische Transportnetz eine Mehrzahl von Etikett-Kante-Routern (125, 126) und eine Mehrzahl von Etikett-Umschalt-Routern (127, 128) aufweist, die mit Datenleitungen miteinander verbunden sind, und
wobei die Zugriffssteuerung (170) zwischen einen Etikett-Kante-Router des physischen Transportnetzes und das Quellenendgerät geschaltet ist.

**8.** Netzsystem gemäß Anspruch 7,
bei dem die Zugriffssteuerung (170) ausgebildet ist, um eine Verbindung in Richtung eines Eingangs-Etikett-Kante-Routers des physischen Transportnetzes, wie z. B. eine Befehlsleitungsschnittstelle, zu eröffnen und eine etikettierte Tunnelwegsignalisierung für eine Kommunikation über das physische Transportnetz hinweg auszulösen.

**9.** Netzsystem gemäß einem der vorherigen Ansprüche,
bei dem die Zugriffssteuerung (170) einen programmierbaren Schalter (178), einen Prozessor (179) zum Erzeugen eines Steuersignals für den programmierbaren Schalter und einen Speicher (171) zum Speichern der Datenaufzeichnung aufweist.

**10.** Netzsystem gemäß einem der vorherigen Ansprüche,
bei dem die Zugriffssteuerung (170) ausgebildet ist, um zwischen die Endgeräte des Netzsystems und das physische Transportnetz geschaltet zu sein, so dass es kein Endgerät gibt, das direkt mit dem physischen Transportnetz verbunden ist,
wobei die Zugriffssteuerung (170) als eine zentralisierte Steuerung oder in einer verteilten Weise implementiert ist.

**11.** Netzsystem gemäß einem der vorherigen Ansprüche,
bei dem das physische Transportnetz (120) einen Tunnelungsbereich und eine verteilte oder zentralisierte Steuerung (129) aufweist, die als Netzverwaltungssystem/Betriebsunterstützungssystem implementiert ist,
wobei die Steuerung (129) ausgebildet ist, um die Dienstgüterichtlinie in dem Tunnelungsbereich zu initialisieren (1100),
wobei die Steuerung (129) angepasst ist, um die Zugriffssteuerung durch Bereitstellen von Informationen über die Datenaufzeichnung an die Zugriffssteuerung zu konfigurieren (1102, 1105),
wobei das Netzsystem ferner eine Erstes-Virtuelles-Netz-Steuerung (130) für das erste virtuelle Netz und eine Zweites-Virtuelles-Netz-Steuerung (131) für das zweite virtuelle Netz aufweist, und
wobei jede Virtuelles-Netz-Steuerung zum Anweisen (1104, 1108) der Steuerung oder der Zugriffssteuerung, die Informationen über die verfügbare Bandbreite in der Datenaufzeichnung für das spezifische virtuelle Netz zu halten, angepasst ist.

**12.** Netzsystem gemäß einem der vorherigen Ansprüche,
bei dem die Zugriffssteuerung (170) ferner ausgebildet ist, um eine weitere Datenaufzeichnung (172) zu halten, die eine Dienstgüterichtlinie des physischen Transportnetzes beschreibt, wobei die Dienstgüterichtlinie Informationen über Dienstgüteklassen, die durch das physische Transportnetz unterstützt werden, und Informationen über eine verfügbare Bandbreite für jede Dienstgüteklasse des physischen Transportnetzes aufweist.

**13.** Zugriffssteuerung, die zwischen ein Quellenendgerät und ein physisches Transportnetz schaltbar ist, die folgende Merkmale aufweist:

einen Speicher (121) zum Speichern einer Datenaufzeichnung, die für jedes virtuelle Netz Informationen über eine verfügbare Bandbreite für das virtuelle Netz aufweist; und
eine Steuereinheit (179), die zum Steuern eines Starts einer ersten Sitzung in einem ersten virtuellen Netz und eines Starts einer zweiten Sitzung in einem zweiten virtuellen Netz unter Verwendung der Datenaufzeichnung ausgebildet ist,

wobei das erste virtuelle Netz ausgebildet ist, um eine erste Mehrzahl von Dienstgüteklassen (129) bereitzustellen, wobei das zweite virtuelle Netz ausgebildet ist, um eine zweite Mehrzahl von Dienstgüteklassen (122) bereitzustellen, wobei das physische Transportnetz ausgebildet ist, um eine Mehrzahl von Transport-Dienstgüteklassen (120) bereitzustellen,
wobei die Steuereinheit (179) ausgebildet ist, um den Start der ersten Sitzung oder der zweiten Sitzung unter Verwendung von Informationen über eine verfügbare Bandbreite für eine spezifisch angeforderte Dienstgüteklasse für das entsprechende virtuelle Netz zu steuern,
wobei die Datenaufzeichnung (171) ferner für jedes virtuelle Netz Informationen über eine verfügbare Bandbreite für jede Dienstgüteklasse der ersten und der zweiten Mehrzahl von Dienstgüteklassen aufweist, und
wobei für jede Dienstgüteklasse eine Summe maximaler Bandbreiten für alle virtuellen Netze kleiner oder gleich einer maximalen Bandbreite der entsprechenden Transport-Dienstgüteklasse ist.

**14.** Zugriffssteuerung gemäß Anspruch 13,
wobei die Zugriffssteuerung ausgebildet ist:

um eine Sitzungsaufbau-Anforderung von dem Quellenendgerät abzufangen (173), wobei die Sitzungsaufbau-Anforderung eine Virtuelles-Netz-Identifizierung, die das erste virtuelle Netz identifiziert, eine erforderliche Bandbreite für diese Sitzung und eine erforderliche Dienstgüteklasse aufweist,
um unter Verwendung der Datenaufzeichnung zu prüfen (174), ob die erforderliche Bandbreite für diese Sitzung und die erforderliche Dienstgüteklasse verfügbar ist, und
um in dem Fall, dass nicht ausreichend Bandbreite für das erste virtuelle Netz und die Dienstgüteklasse verfügbar ist, einen Präemptionsalgorithmus zum Auswählen und Abschließen einer unterschiedlichen Sitzung in dem ersten virtuellen Netz durchzuführen (126), ohne eine Sitzung in dem zweiten virtuellen Netz zu beeinflussen.

**15.** Zugriffssteuerung gemäß Anspruch 13,
wobei die Zugriffssteuerung ausgebildet ist:

um eine Sitzungsaufbau-Anforderung von dem Quellenendgerät abzufangen (173), wobei die Sitzungsaufbau-Anforderung eine Virtuelles-Netz-Identifizierung, die das erste virtuelle Netz identifiziert, eine erforderliche Bandbreite für diese Sitzung und eine erforderliche Dienstgüteklasse aufweist,
um unter Verwendung der Datenaufzeichnung zu prüfen (174), ob die erforderliche Bandbreite für diese Sitzung und die erforderliche Dienstgüteklasse verfügbar ist, und
wobei das virtuelle Netz oder die Dienstgüteklassen priorisiert ist/sind, und in dem Fall, dass nicht ausreichend Bandbreite verfügbar ist, die Zugriffssteuerung ausgebildet ist, um einen Präemptionsalgorithmus zum Auswählen und Beenden einer unterschiedüchen Sitzung, die zu einem virtuellen Netz oder einer Dienstgüteklasse mit der gleichen oder einer geringeren Priorität gehört, in entweder dem ersten virtuellen Netz oder dem zweiten virtuellen Netz oder in beiden virtuellen Netzen durchzuführen (176).

**16.** Verfahren zum Betreiben eines Netzsystems mit einem physischen Transportnetz zum Transportieren von Daten für eine Sitzung zwischen zwei Endgeräten und einer Zugriffssteuerung, die zwischen ein Quellenendgerät und das physische Transportnetz geschaltet ist, oder zum Betreiben einer Zugriffssteuerung, das folgende Schritte aufweist:

Speichern einer Datenaufzeichnung, die für jedes virtuelle Netz Informationen über eine verfügbare Bandbreite für das virtuelle Netz aufweist; und
Steuern eines Starts einer ersten Sitzung in einem ersten virtuellen Netz und eines Starts einer zweiten Sitzung in einem zweiten virtuellen Netz unter Verwendung der Datenaufzeichnung,

wobei das erste virtuelle Netz ausgebildet ist, um eine erste Mehrzahl von Dienstgüteklassen (129) bereitzustellen, wobei das zweite virtuelle Netz ausgebildet ist, um eine zweite Mehrzahl von Dienstgüteklassen (122) bereitzustellen, wobei das physische Transportnetz ausgebildet ist, um eine Mehrzahl von Transport-Dienstgüteklassen (120) bereitzustellen,
wobei das Steuern ein Steuern des Starts der ersten Sitzung oder der zweiten Sitzung unter Verwendung von Informationen über eine verfügbare Bandbreite für eine speziell angeforderte Dienstgüteklasse für das entsprechende virtuelle Netz aufweist,
wobei die Datenaufzeichnung (171) ferner für jedes virtuelle Netz Informationen über eine verfügbare Bandbreite für jede Dienstgüteklasse der ersten und der zweiten Mehrzahl von Dienstgüteklassen aufweist, und

wobei für jede Dienstgüteklasse eine Summe maximaler Bandbreiten für alle virtuellen Netze kleiner oder gleich einer maximalen Bandbreite der entsprechenden Transport-Dienstgüteklasse ist.

**17.** Computerprogramm zum Durchführen eines Verfahrens gemäß Anspruch 16, wenn dasselbe auf einem Computer oder Prozessor abläuft.

## Revendications

**1.** Système de réseau, comprenant:

un réseau de transport physique (120) destiné à transporter des données pour une session entre deux terminaux; et
un contrôleur d'accès (170) connecté entre un terminal de source et le réseau de transport physique, où le contrôleur d'accès est configuré pour commander un début d'une première session dans un premier réseau virtuel et un début d'une deuxième session dans un deuxième réseau virtuel à l'aide d'un jeu de données (171) comprenant, pour chaque réseau virtuel, des informations sur une largeur de bande disponible pour le réseau virtuel,

dans lequel le premier réseau virtuel est configuré pour fournir une première pluralité de classes de qualité de service (129),
dans lequel le deuxième réseau virtuel est configuré pour fournir une deuxième pluralité de classes de qualité de service (122),
dans lequel le réseau de transport physique est configuré pour fournir une pluralité de classes de qualité de service de transport (120),
dans lequel le contrôleur d'accès (170) est configuré pour commander le début de la première session ou de la deuxième session à l'aide des informations sur une largeur de bande disponible pour une classe de qualité de service spécifiquement demandée pour le réseau virtuel correspondant,
dans lequel le jeu de données (171) comprend par ailleurs, pour chaque réseau virtuel, des informations sur une largeur de bande disponible pour chaque classe de qualité de service des première et deuxième pluralités de classes de qualité de service, et
dans lequel, pour chaque classe de qualité de service, une somme de largeurs de bande maximales pour tous les réseaux virtuels est inférieure ou égale à une largeur de bande maximale de la classe de qualité de service de transport correspondante.

**2.** Système de réseau selon la revendication 1,
dans lequel le jeu de données (171) comprend une table mémorisée comprenant, pour chaque réseau virtuel, une identification de réseau virtuel (171a), une identification de classe de qualité de service (171b), des informations sur une largeur de bande totale pour chaque classe de qualité de service (171c), ou des informations (171d) sur une largeur de bande actuellement disponible ou actuellement utilisée pour chaque classe de qualité de service.

**3.** Système de réseau selon l'une des revendications précédentes,
dans lequel le contrôleur d'accès (170) est configuré:

pour intercepter (173) une demande d'établissement de session à partir du terminal de source, la demande d'établissement de session comprenant une identification de réseau virtuel identifiant le premier réseau virtuel, une largeur de bande requise pour cette session et une classe de qualité de service requise,
pour vérifier (174) si la largeur de bande requise pour cette session et la classe de qualité de service requise est disponible, à l'aide du jeu de données, et
pour transmettre (175) la demande d'établissement de session au réseau de transport physique, au cas où la largeur de bande est disponible.

**4.** Système de réseau selon la revendication 3, dans lequel le contrôleur d'accès (170) est par ailleurs configuré pour intercepter une réponse d'établissement de session en réponse à la demande d'établissement de session transmise et pour mettre à jour le jeu de données en réduisant la largeur de bande disponible pour le réseau virtuel et la classe de qualité de service de la quantité demandée pour cette session.

**5.** Système de réseau selon l'une des revendications précédentes,

dans lequel le contrôleur d'accès (170) est configuré:

pour intercepter (173) une demande d'établissement de session à partir du terminal de source, la demande d'établissement de session comprenant une identification de réseau virtuel identifiant le premier réseau virtuel, une largeur de bande requise pour cette session et une classe de qualité de service requise,
pour vérifier (174) si la largeur de bande requise pour cette session et la classe de qualité de service requise est disponible, à l'aide du jeu de données, et
au cas où il n'y a pas assez de largeur de bande disponible pour le premier réseau virtuel et la classe de qualité de service, pour effectuer (176) un algorithme de préemption pour sélectionner et terminer une session différente dans le premier réseau virtuel sans influencer toute session dans le deuxième réseau virtuel.

**6.** Système de réseau selon l'une des revendications précédentes,
dans lequel le contrôleur d'accès (170) est configuré:

pour intercepter (173) une demande d'établissement de session à partir du terminal de source, la demande d'établissement de session comprenant une identification de réseau virtuel identifiant le premier réseau virtuel, une largeur de bande requise pour cette session et une classe de qualité de service requise,
pour vérifier (174) si la largeur de bande requise pour cette session et la classe de qualité de service requise est disponible, à l'aide du jeu de données, et
dans lequel le réseau virtuel ou les classes de qualité de service sont priorisés et, au cas où une largeur de bande suffisante n'est pas disponible, le contrôleur d'accès est configuré pour effectuer (176) un algorithme de préemption pour sélectionner et terminer une session différente appartenant à un réseau virtuel ou une classe de qualité de service présentant la même priorité ou une priorité inférieure dans le premier réseau virtuel ou le deuxième réseau virtuel ou dans les deux réseaux virtuels.

**7.** Système de réseau selon l'une des revendications précédentes, dans lequel le réseau de transport physique comprend une pluralité de routeurs de bord d'étiquette (125, 126) et une pluralité de routeurs de commutation d'étiquette (127, 128) connectés l'un à l'autre par des lignes de données, et
dans lequel le contrôleur d'accès (170) est connecté entre un routeur de bord d'étiquette du réseau de transport physique et le terminal de source.

**8.** Système de réseau selon la revendication 7,
dans lequel le contrôleur d'accès (170) est configuré pour ouvrir une connexion vers un routeur de bord d'étiquette d'entrée du réseau de transport physique tel qu'une interface de ligne de commande, et pour déclencher une signalisation de trajet de tunnel étiqueté pour une communication à travers le réseau de transport physique.

**9.** Système de réseau selon l'une des revendications précédentes,
dans lequel le contrôleur d'accès (170) comprend un commutateur programmable (178), un professeur (179) destiné à générer un signal de commande pour le commutateur programmable, et une mémoire (171) destinée à mémoriser le jeu de données.

**10.** Système de réseau selon l'une des revendications précédentes,
dans lequel le contrôleur d'accès (170) est configuré pour être connecté entre les terminaux du système de réseau et le réseau de transport physique de sorte qu'il n'existe pas de terminal connecté directement au réseau de transport physique,
dans lequel le contrôleur d'accès (170) est mis en oeuvre comme contrôleur centralisé ou de manière distribuée.

**11.** Système de réseau selon l'une des revendications précédentes,
dans lequel le réseau de transport physique (120) comprend un domaine de tunnel et un contrôleur distribué ou centralisé (129) mis en oeuvre comme système de gestion de réseau/système de support opérationnel,
dans lequel le contrôleur (129) est configuré pour initialiser (1100) la politique de qualité de service dans le domaine de tunnel,
dans lequel le contrôleur (129) est adapté pour configurer (1102, 1105) le contrôleur d'accès en fournissant les informations sur le jeu de données au contrôleur d'accès,
dans lequel le système de réseau comprend par ailleurs un premier contrôleur de réseau virtuel (130) pour le premier réseau virtuel et un deuxième contrôleur de réseau virtuel (131) pour le deuxième réseau virtuel, et
dans lequel chaque contrôleur de réseau virtuel est adapté pour donner instruction (1104, 1108) au contrôleur ou au contrôleur d'accès de maintenir les informations sur la largeur de bande disponible dans le jeu de données pour le réseau virtuel spécifique.

**12.** Système de réseau selon l'une des revendications précédentes,
dans lequel le contrôleur d'accès (170) est par ailleurs configuré pour maintenir un autre jeu de données (172) décrivant une politique de qualité de service du réseau de transport physique, la politique de qualité de service comprenant des informations sur les classes de qualité de service supportées par le réseau de transport physique et des informations sur une largeur de bande disponible pour chaque classe de qualité de service du réseau de transport physique.

**13.** Contrôleur d'accès pouvant être connecté entre un terminal de source et un réseau de transport physique, comprenant:

une mémoire (121) destinée à mémoriser un jeu de données comprenant, pour chaque réseau virtuel, des informations sur une largeur de bande disponible pour le réseau virtuel; et
une unité de commande (179) configurée pour commander un début d'une première session dans un premier réseau virtuel et un début d'une deuxième session dans un deuxième réseau virtuel à l'aide du jeu de données,

dans lequel le premier réseau virtuel est configuré pour fournir une première pluralité de classes de qualité de service (129),
dans lequel le deuxième réseau virtuel est configuré pour fournir une deuxième pluralité de classes de qualité de services (122),
dans lequel le réseau de transport physique est configuré pour fournir une pluralité de classes de qualité de transport (120),
dans lequel l'unité de commande (179) est configurée pour commander le début de la première session ou de la deuxième session à l'aide des informations sur une largeur de bande disponible pour une classe de qualité de service spécifiquement demandée pour le réseau virtuel correspondant,
dans lequel le jeu de données (171) comprend par ailleurs, pour chaque réseau virtuel, des informations sur une largeur de bande disponible pour chaque classe de qualité de service des première et deuxième pluralités de classes de qualité de service, et
dans lequel, pour chaque classe de qualité de service, une somme de largeurs de bande maximales pour tous les réseaux virtuels est inférieure ou égale à une largeur de bande maximale de la classe de qualité de service de transport correspondante.

**14.** Contrôleur d'accès selon la revendication 13,
dans lequel le contrôleur d'accès est configuré:

pour intercepter (173) une demande d'établissement de session à partir du terminal de source, la demande d'établissement de session comprenant une identification de réseau virtuel identifiant le premier réseau virtuel, une largeur de bande requise pour cette session et une classe de qualité de service requise,
pour vérifier (174) si la largeur de bande requise pour cette session et la classe de qualité de service requise est disponible, à l'aide du jeu de données, et
au cas où il n'est pas disponible suffisamment de largeur de bande pour le premier réseau virtuel et la classe de qualité de service, pour effectuer (126) un algorithme de préemption pour sélectionner et terminer une session différente dans le premier réseau virtuel sans influencer toute session dans le deuxième réseau virtuel.

**15.** Contrôleur d'accès selon la revendication 13,
dans lequel le contrôleur d'accès est configuré:

pour intercepter (173) une demande d'établissement de session à partir du terminal de source, la demande d'établissement de session comprenant une identification de réseau virtuel identifiant le premier réseau virtuel, une largeur de bande requise pour cette session et une classe de qualité de service requise,
pour vérifier (174) si la largeur de bande requise pour cette session et la classe de qualité de service requise est disponible, à l'aide du jeu de données, et
dans lequel le réseau virtuel ou les classes de qualité de service sont priorisés et, au cas où une largeur de bande suffisante n'est pas disponible, le contrôleur d'accès est configuré pour effectuer (176) un algorithme de préemption pour sélectionner et terminer une session différente appartenant à un réseau virtuel ou une classe de qualité de service présentant la même priorité ou une priorité inférieure dans le premier réseau virtuel ou le deuxième réseau virtuel ou dans les deux réseaux virtuels.

**16.** Procédé pour faire fonctionner un système de réseau comprenant un réseau de transport physique destiné à transporter des données pour une session entre deux terminaux et un contrôleur d'accès connecté entre un terminal de source et le réseau de transport physique ou pour faire fonctionner un contrôleur d'accès, comprenant le fait de:

mémoriser un jeu de données comprenant, pour chaque réseau virtuel, des informations sur une largeur de bande disponible pour le réseau virtuel; et
commander un début d'une première session dans un premier réseau virtuel et un début d'une deuxième session dans un deuxième réseau virtuel à l'aide du jeu de données,

dans lequel le premier réseau virtuel est configuré pour fournir une première pluralité de classes de qualité de service (129),
dans lequel le deuxième réseau virtuel est configuré pour fournir une deuxième pluralité de classes de qualité de service (122),
dans lequel le réseau de transport physique est configuré pour fournir une pluralité de classes de qualité de transport (120),
dans lequel la commande comprend le fait de commander le début de la première session ou de la deuxième session à l'aide des informations sur une largeur de bande disponible pour une classe de qualité de service spécifiquement demandée pour le réseau virtuel correspondant,
dans lequel le jeu de données (171) comprend par ailleurs, pour chaque réseau virtuel, des informations sur une largeur de bande disponible pour chaque classe de qualité de service des première et deuxième pluralités de classes de qualité de service, et
dans lequel, pour chaque classe de qualité de service, une somme de largeurs de bande maximales pour tous les réseaux virtuels est inférieure ou égale à une largeur de bande maximale de la classe de qualité de service de transport correspondante.

**17.** Programme d'ordinateur pour réaliser, lorsqu'il est exécuté sur un ordinateur ou un processeur, un procédé selon la revendication 16.

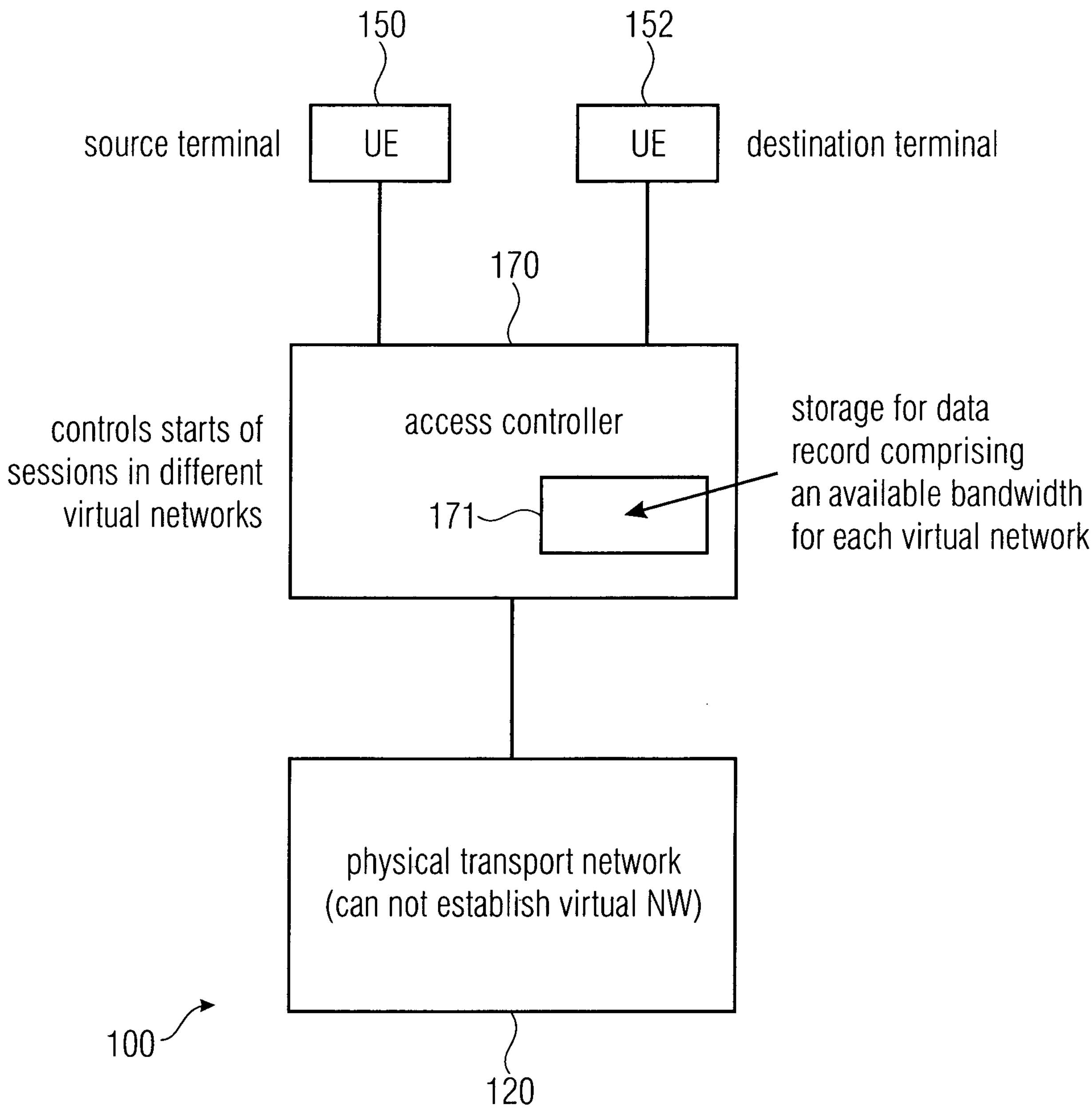
150
152
source terminal
UE
UE
destination terminal
170
controls starts of sessions in different virtual networks
access controller
171
storage for data record comprising an available bandwidth for each virtual network
physical transport network (can not establish virtual NW)
100
120

FIG 1

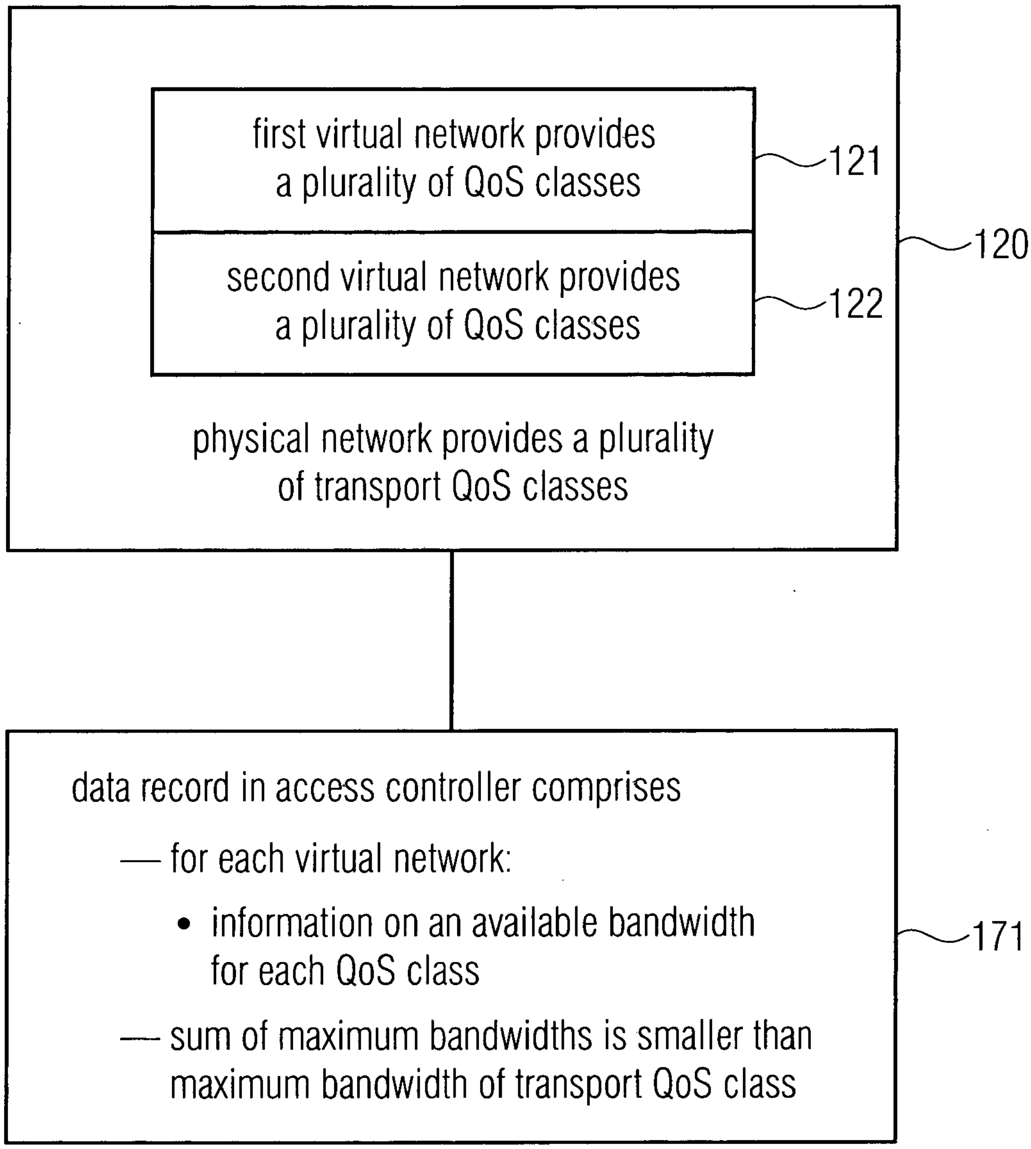
first virtual network provides
a plurality of QoS classes
121
second virtual network provides
a plurality of QoS classes
122
120
physical network provides a plurality
of transport QoS classes
data record in access controller comprises
— for each virtual network:
• information on an available bandwidth
for each QoS class
— sum of maximum bandwidths is smaller than
maximum bandwidth of transport QoS class
171

FIG 2

data record is a stored table

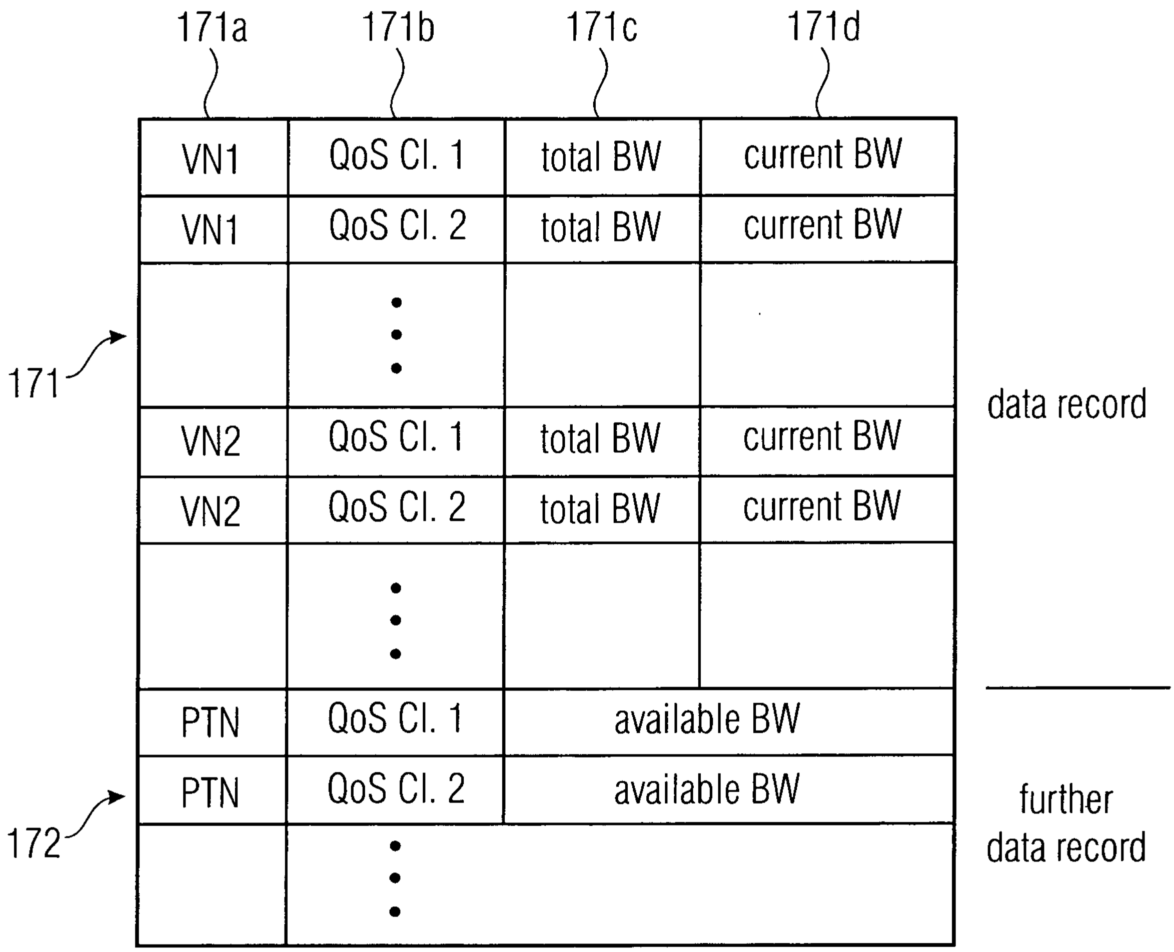


FIG 3

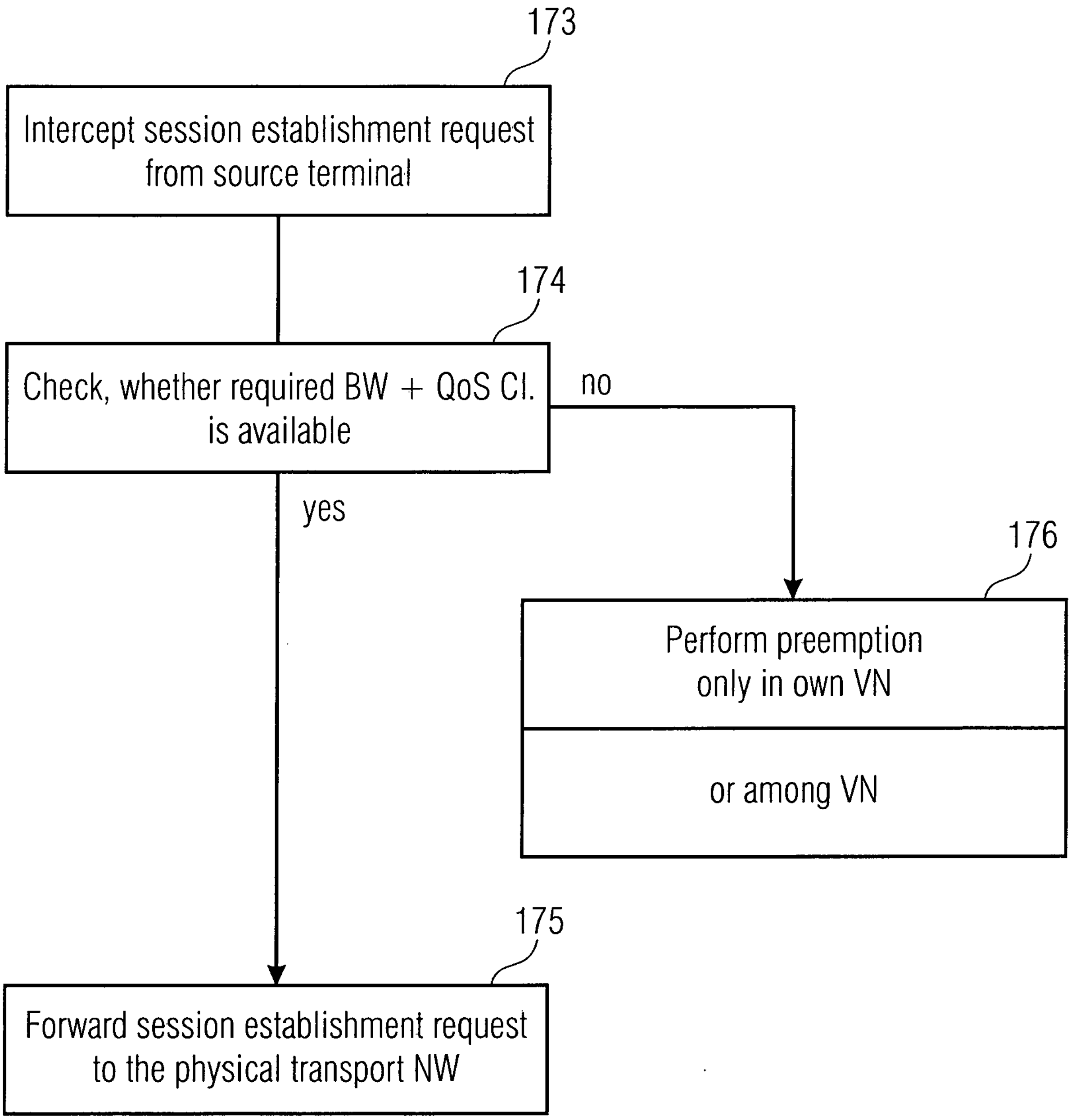
173
Intercept session establishment request from source terminal
174
Check, whether required BW + QoS Cl. is available
no
yes
176
Perform preemption only in own VN
or among VN
175
Forward session establishment request to the physical transport NW

FIG 4

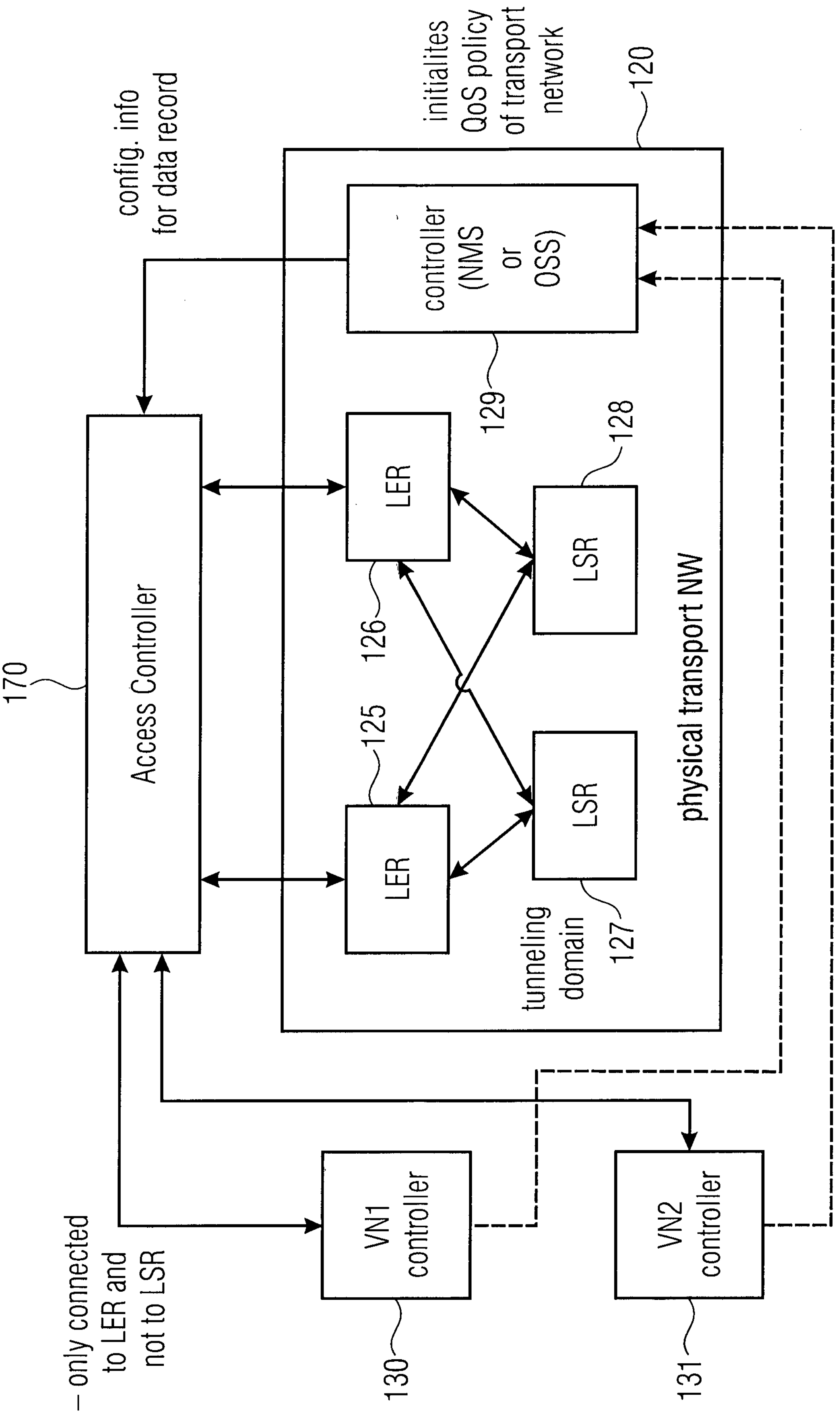
config. info
for data record
initialites
QoS policy
of transport
network
120
controller
(NMS
or
OSS)
129
170
Access Controller
LER
LER
125
126
LSR
LSR
128
127
tunneling
domain
physical transport NW
– only connected
to LER and
not to LSR
VN1
controller
VN2
controller
130
131

FIG 5

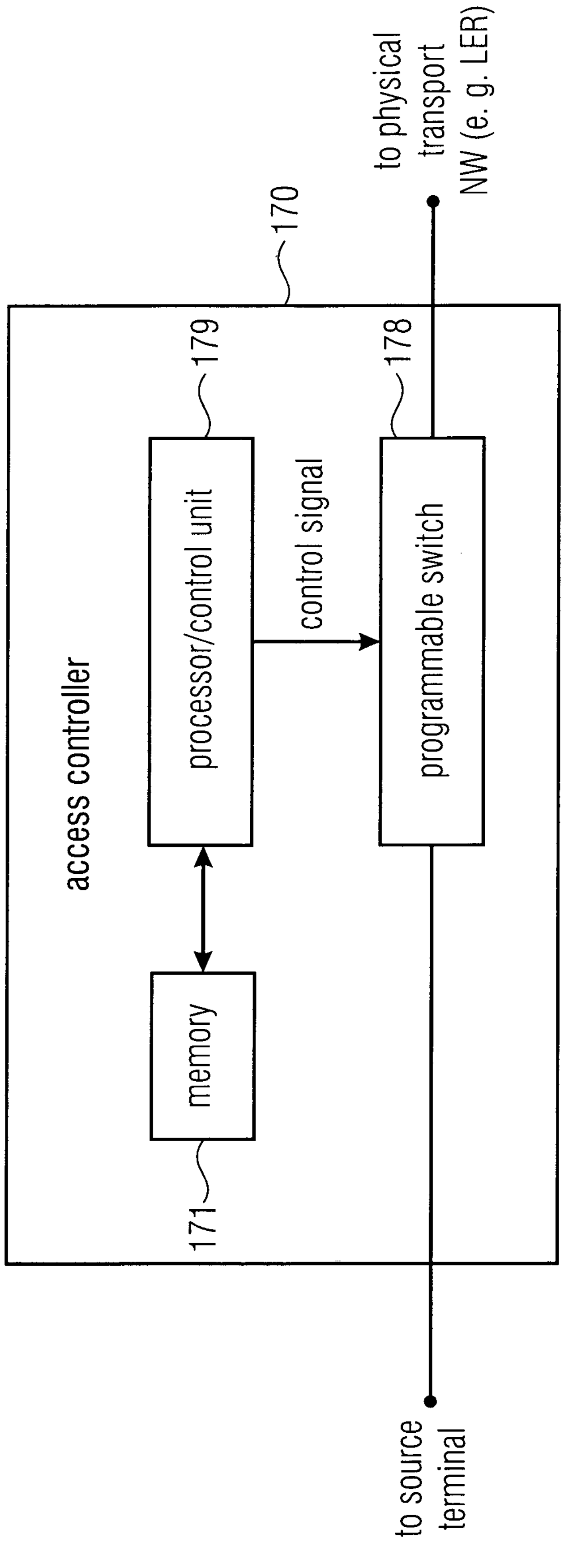
to physical transport NW (e. g. LER)
170
access controller
179
processor/control unit
control signal
178
programmable switch
memory
171
to source terminal

FIG 6

- Multiple virtual networks on the same transport network infrastructure
- Virtual network for 4G-5G, voice – video

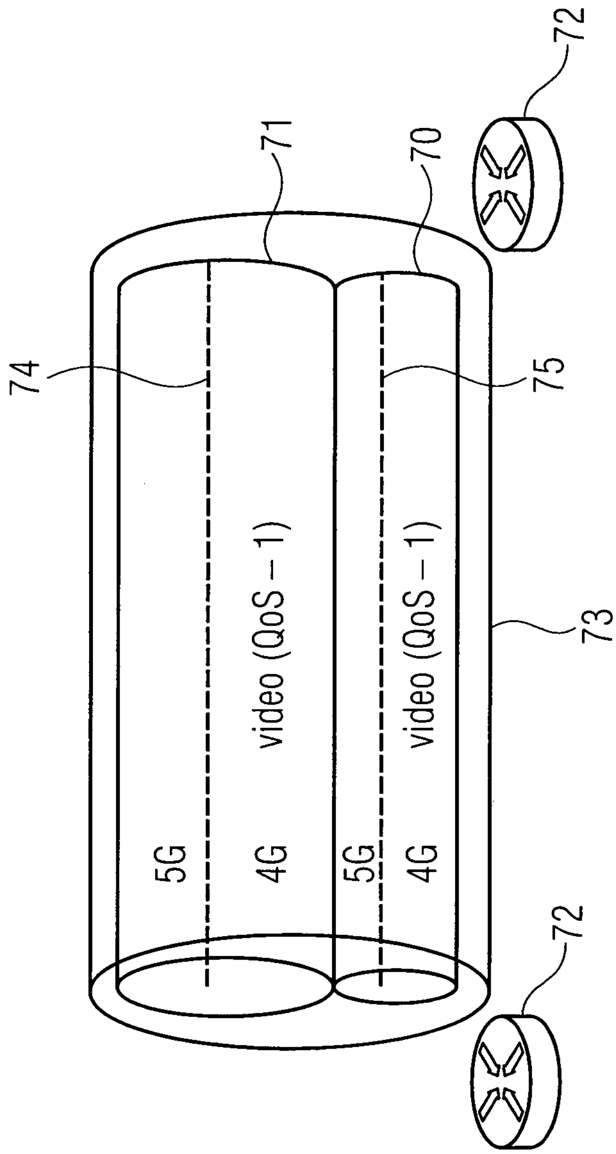


FIG 7

- MPLS Bandwidth constraint model (MAM, RDM) admits traffic based on available BW for a particular QoS class
  - it is not equipped to distinguish from which virtual network (VN) this traffic is coming from
  - may admit traffic from a VN into the resources of another VN

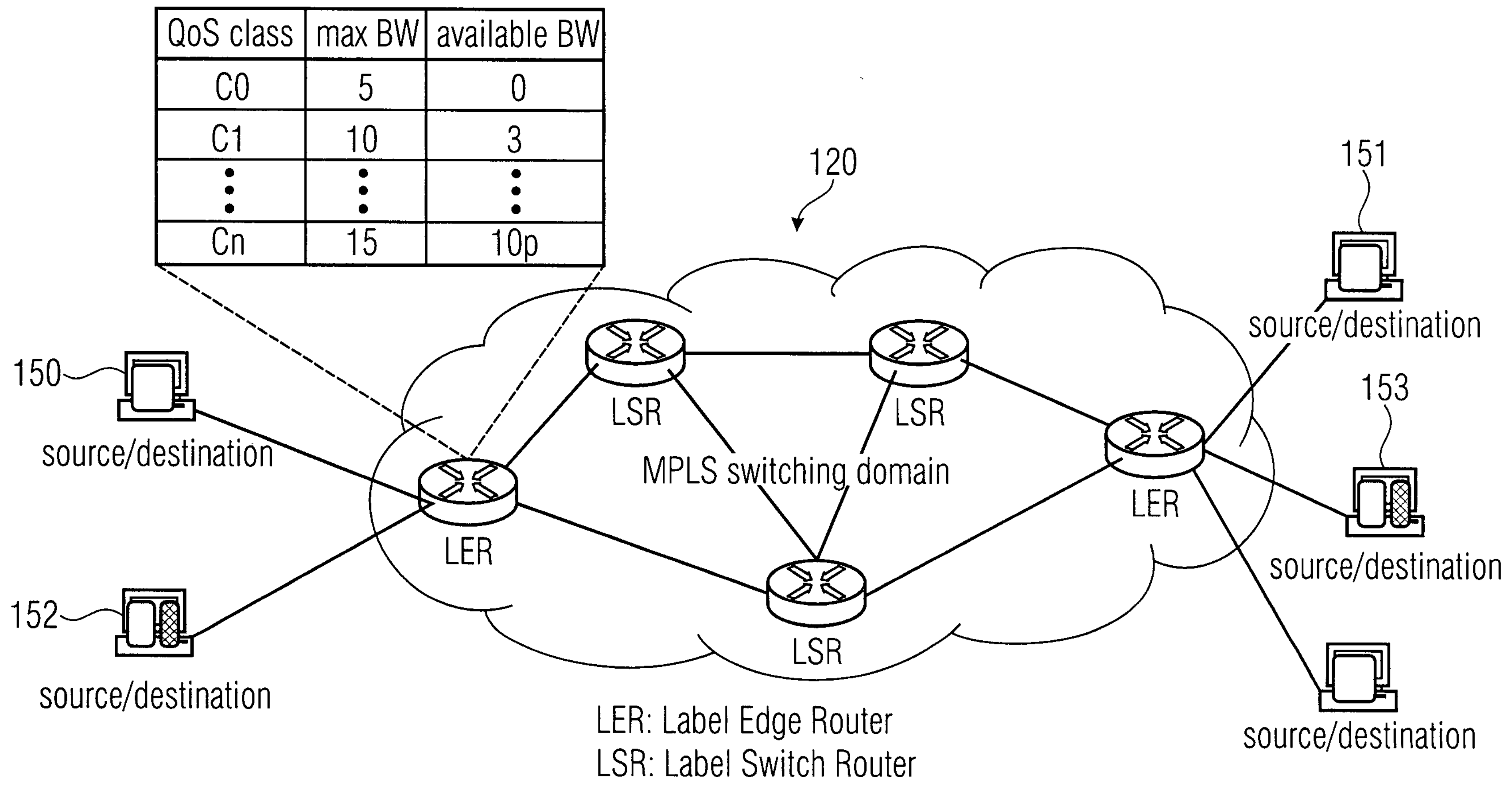


| QoS class | max BW | available BW |
|---|---|---|
| C0 | 5 | 0 |
| C1 | 10 | 3 |
| ⋮ | ⋮ | ⋮ |
| Cn | 15 | 10p |

FIG 8

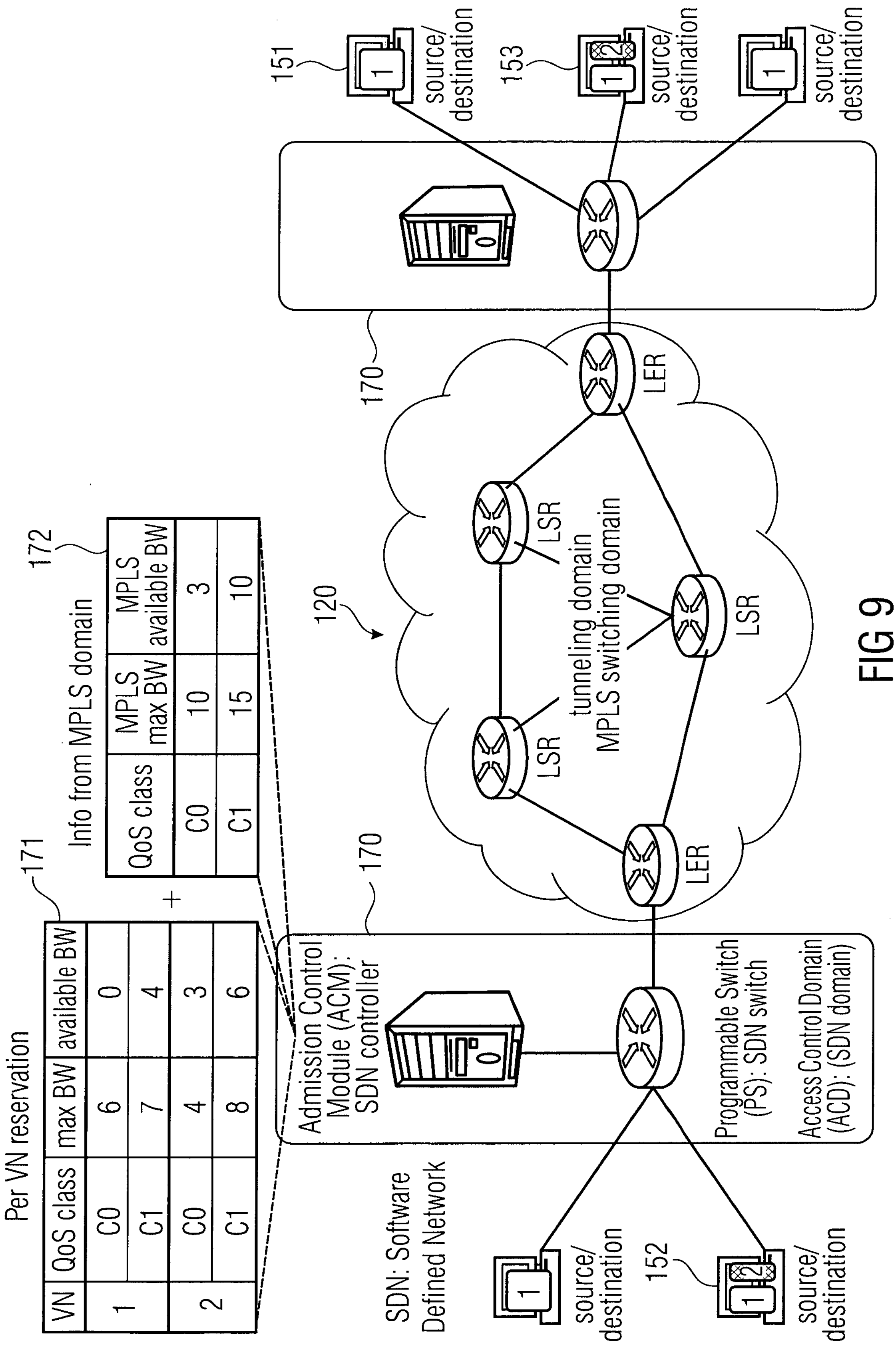


| VN | QoS class | max BW | available BW |
|---|---|---|---|
| 1 | C0 | 6 | 0 |
|  | C1 | 7 | 4 |
| 2 | C0 | 4 | 3 |
|  | C1 | 8 | 6 |

| QoS class | MPLS max BW | MPLS available BW |
|---|---|---|
| C0 | 10 | 3 |
| C1 | 15 | 10 |

FIG 9

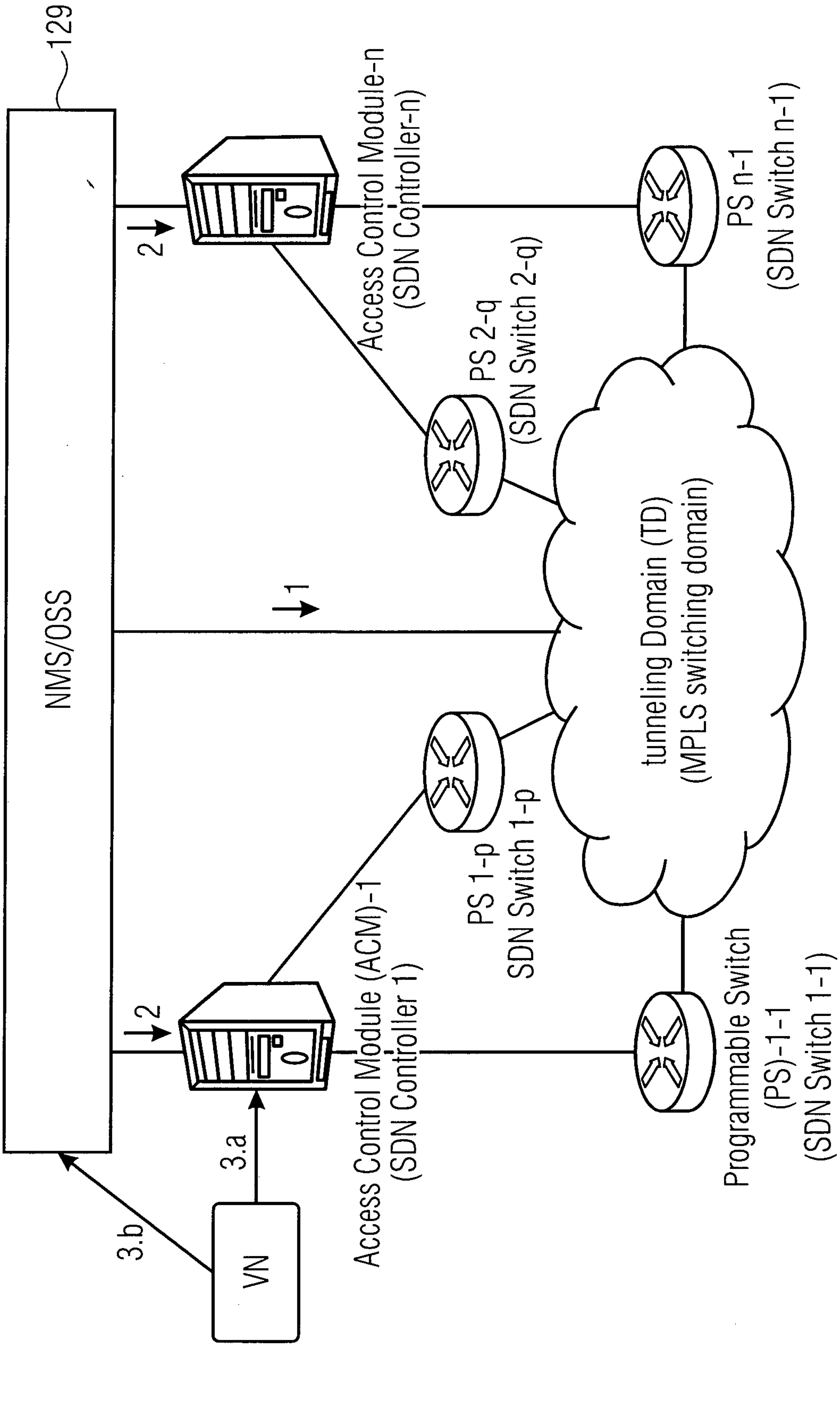


FIG 10A
(CENTRALIZED NMS/OSS)

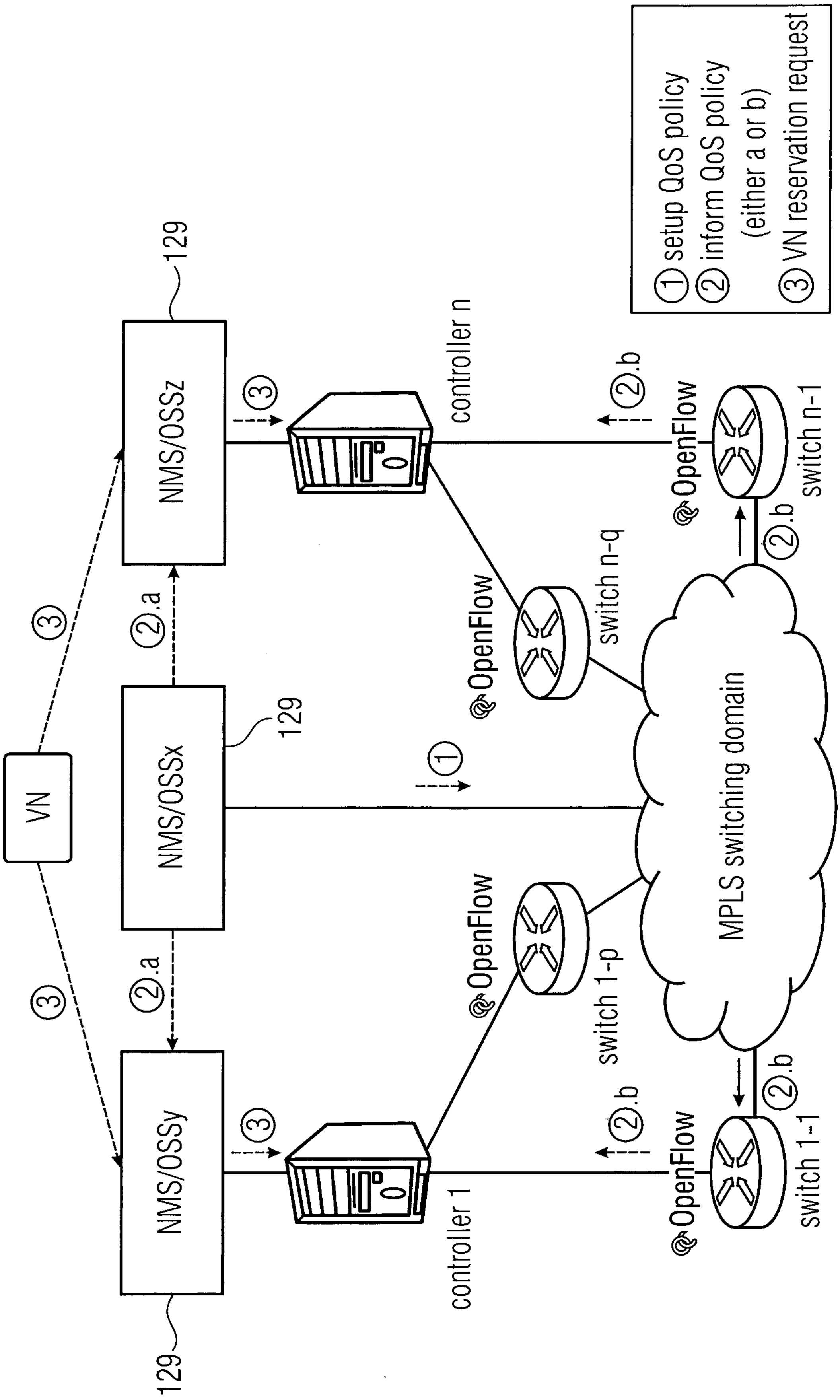


FIG 10B
(DISTRIBUTED NMS/OSS)

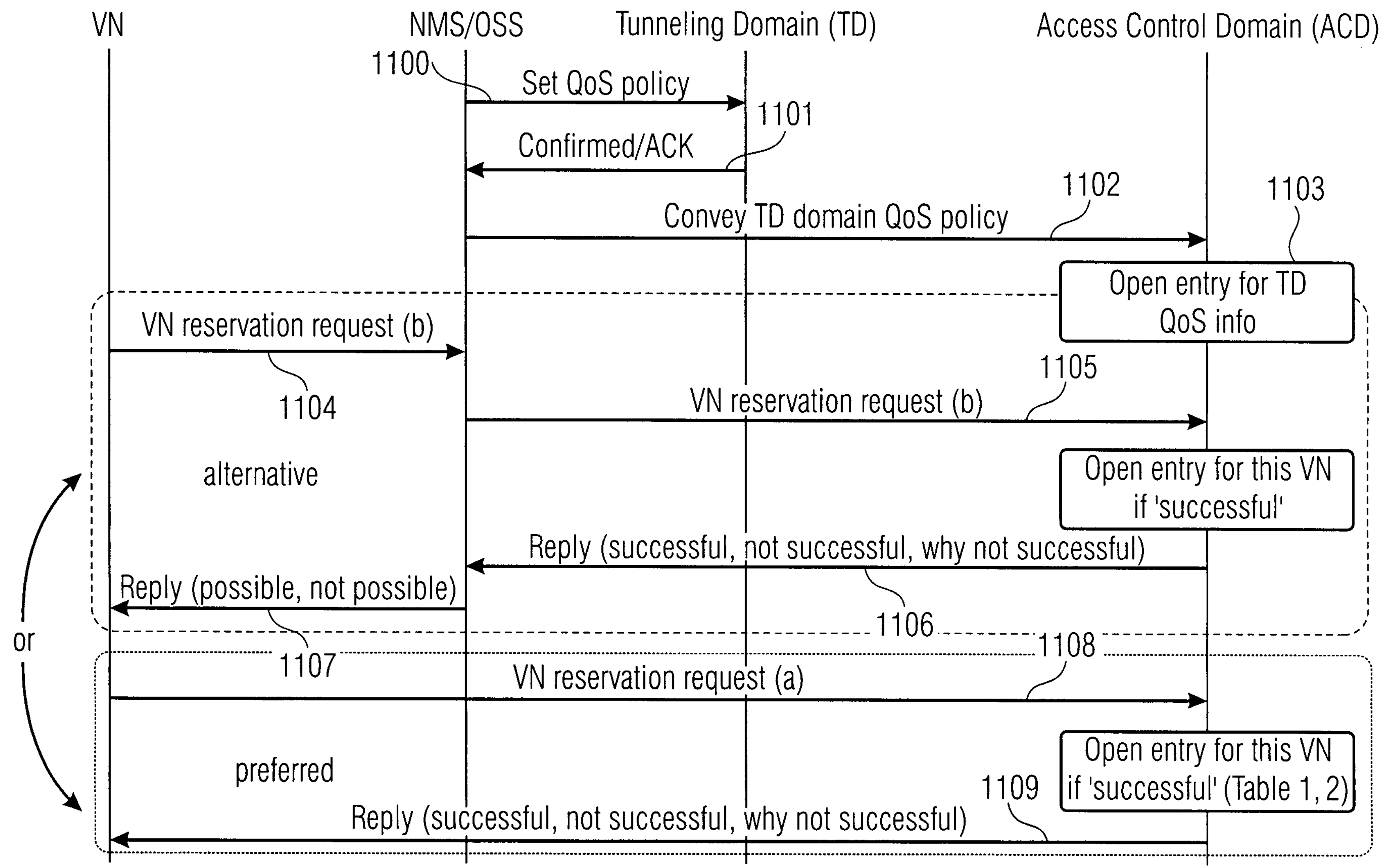


FIG 11
(VN RESERVATION REQUEST)

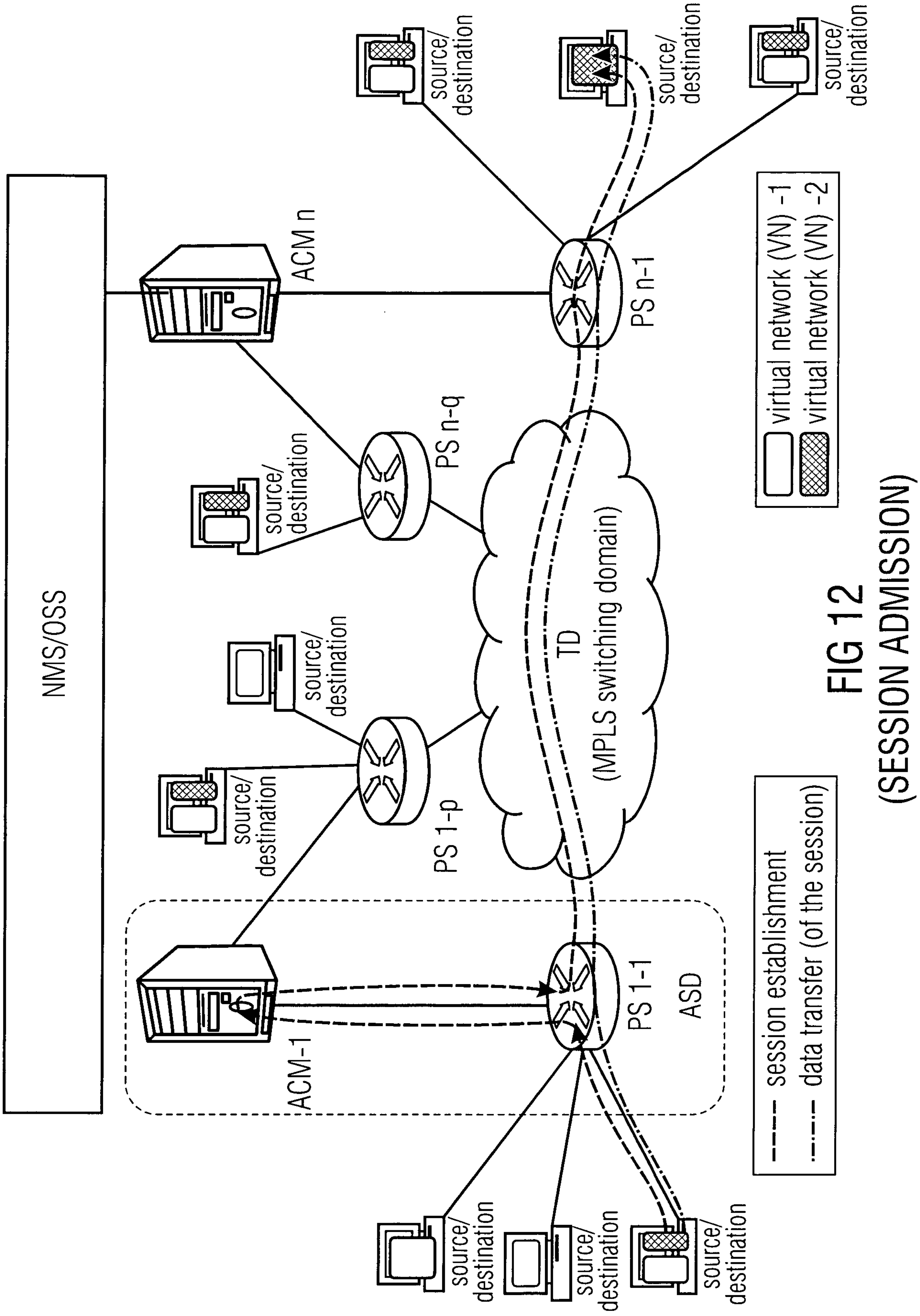


FIG 12
(SESSION ADMISSION)

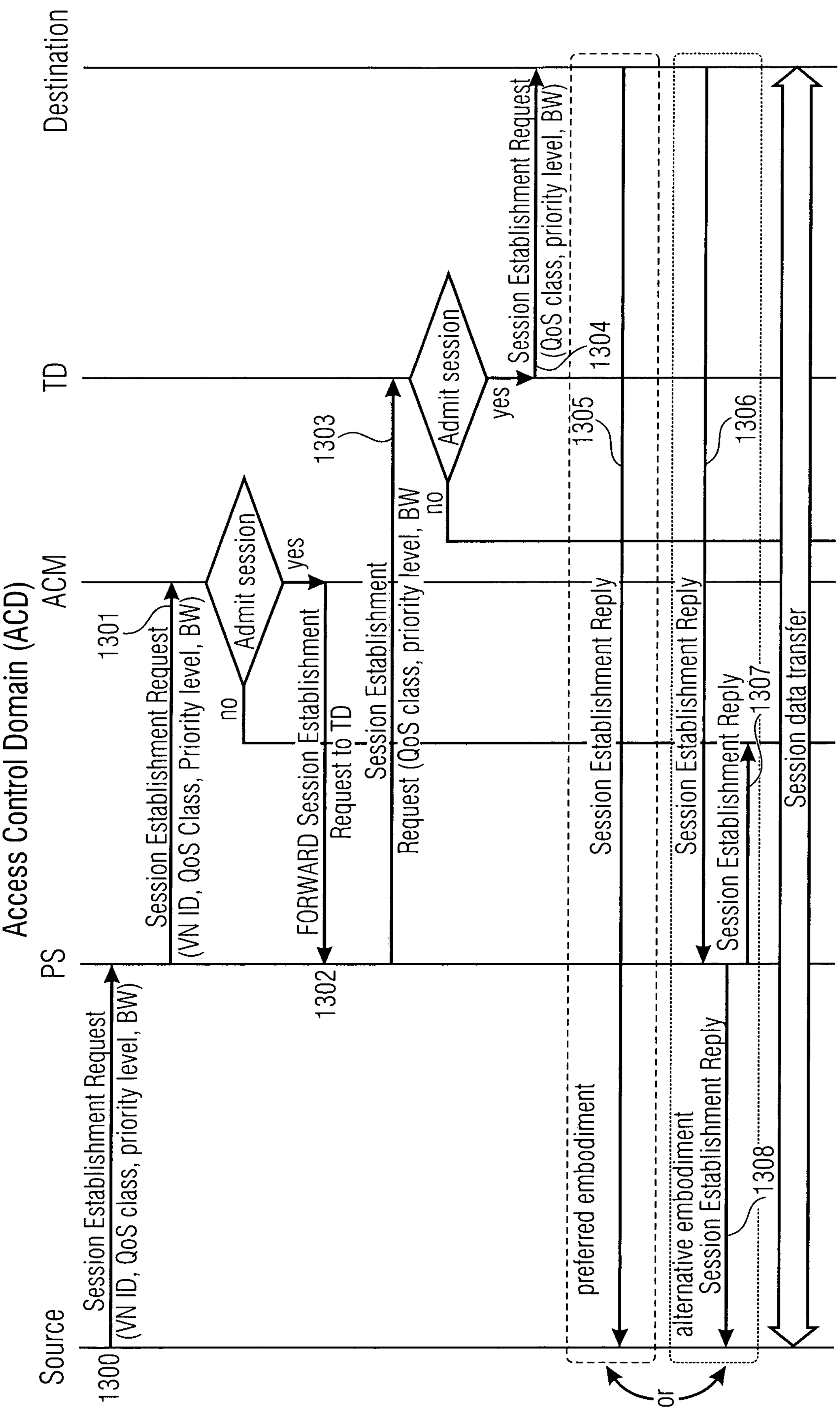


FIG 13A
(SESSION ADMISSION — MESSAGE FLOW)

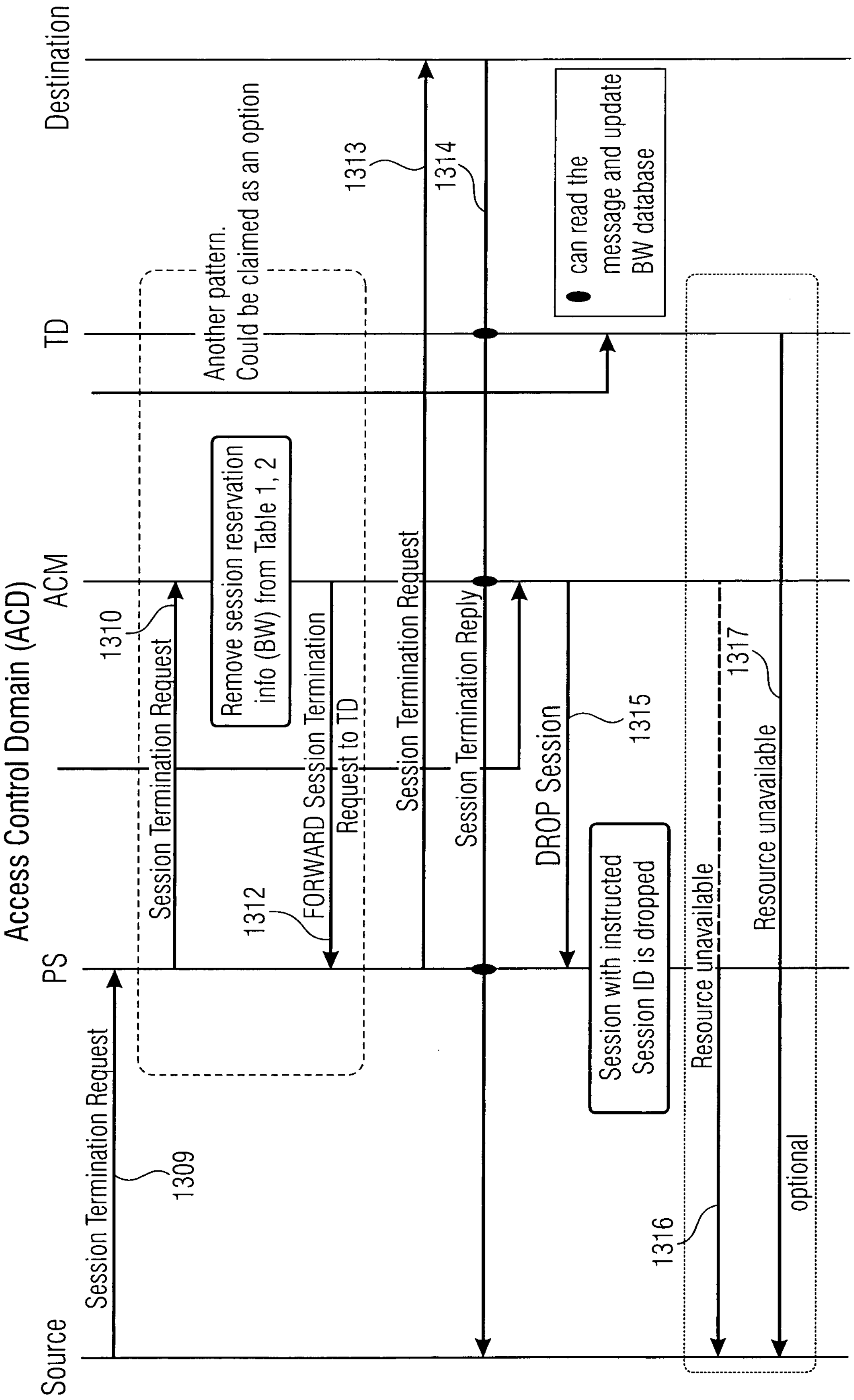


FIG 13B
(SESSION ADMISSION — MESSAGE FLOW)

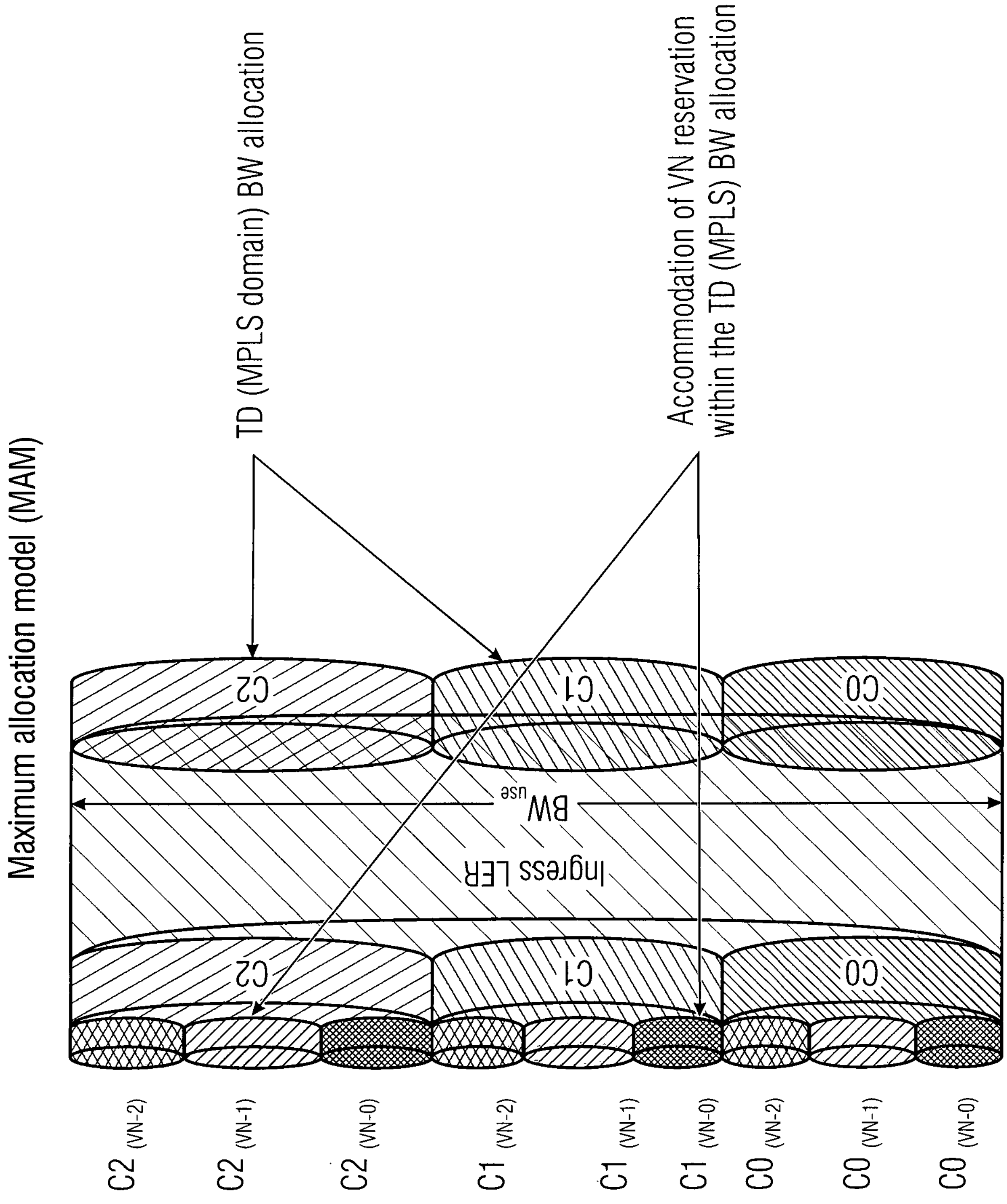
Maximum allocation model (MAM)
TD (MPLS domain) BW allocation
Accommodation of VN reservation within the TD (MPLS) BW allocation
C2
C1
C0
$BW_{use}$
Ingress LER
C2 (VN-2)
C2 (VN-1)
C2 (VN-0)
C1 (VN-2)
C1 (VN-1)
C1 (VN-0)
C0 (VN-2)
C0 (VN-1)
C0 (VN-0)

FIG 14A

Table: VN state at access control domain

| VN ID | QoS class | QoS class ID | total BW | available BW |
|---|---|---|---|---|
| VN-0 | C0 | | | Optional. Controller needs to maintain it if this info is not available from the switch |
| | C1 | | | |
| | C2 | | | |
| ⋮ | ⋮ | | | |
| VN-m | C0 | | | |
| | C1 | | | |
| | ⋮ | | | |
| | Cn | | | |

Total QoSD classes:

C0 ~ Cn; n = 2 in this example

Total VN:

VN - 0 ~ m; m = 2 in this example

Therefore:

$BW_{use} \geq C0 + C1 + \ldots + Cn$

$C0 \geq C0_{(VN-0)} + C0_{(VN-1)} + \ldots + C0_{(VN-m)}$

$C1 \geq C1_{(VN-0)} + C1_{(VN-1)} + \ldots + C1_{(VN-m)}$

⋮

$Cn \geq Cn_{(VN-0)} + Cn_{(VN-1)} + \ldots + Cn_{(VN-m)}$

FIG 14B

(MAM)

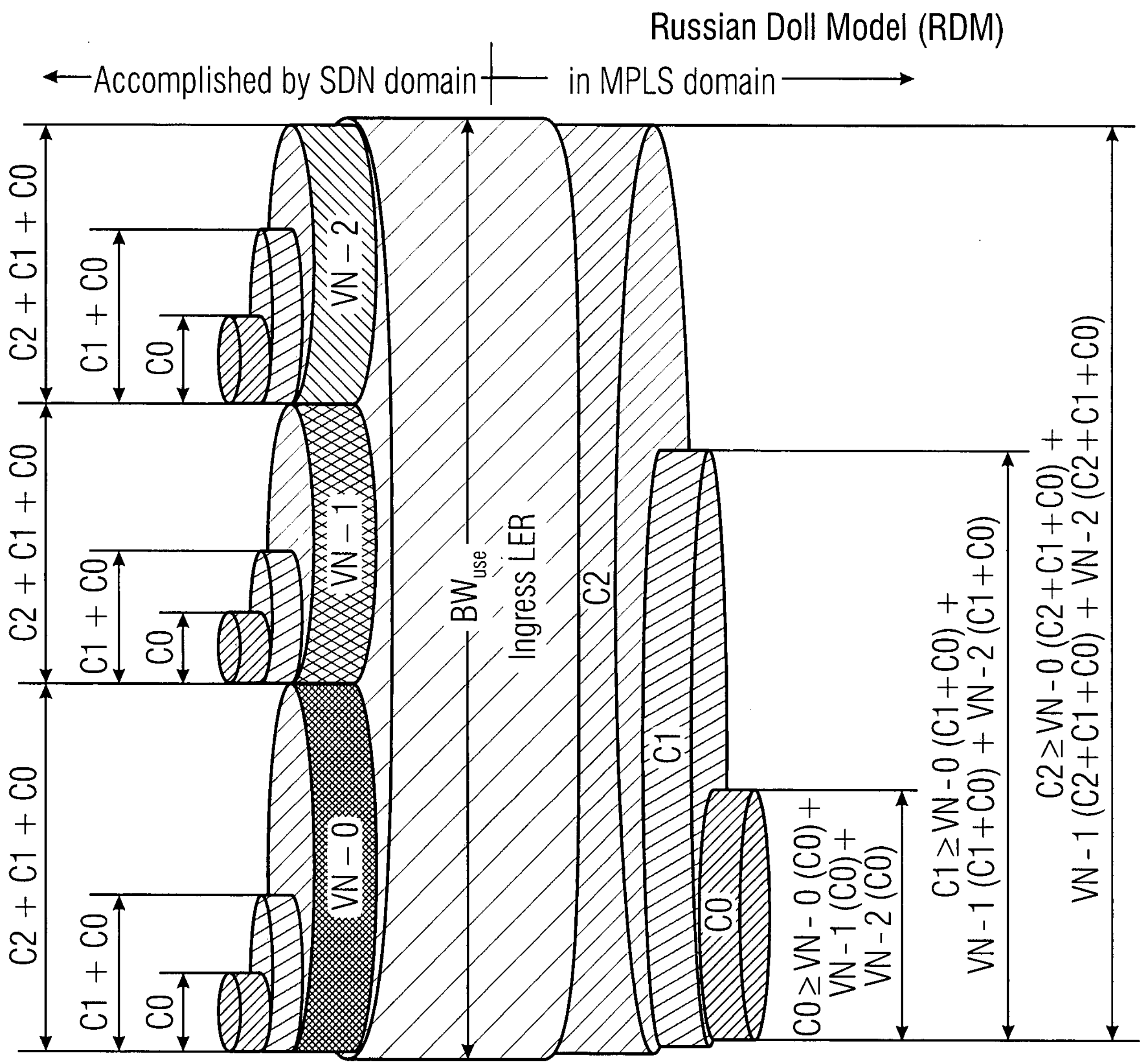


- Multiple QoS classes can share the combined BW
- In presence of higher priority QoS class, lower priority QoS classes can be preempted (same QoS class can hold different priority levels).

FIG 15

# Preemption inside a VN

Table: VN state at SDN domain (for RDM)

| VN ID | QoS class | QoS class ID | total BW | available BW |
|---|---|---|---|---|
| VN-0 | C0 | | C0 | Optional. Controller needs to maintain it if this info is not available from the switch |
| | C1 | | C1 + C0 | |
| | C2 | | C2 + C1 + C0 | |
| • • • | • • • | | | |
| VN-m | C0 | | C0 | |
| | C1 | | C1 + C0 | |
| | • • • | | | |
| | Cn | | $Cn + Cn_{-1} + \ldots + C0$ | |

FIG 16A

1. The ACM finds out from the session establishment request from which VN the request is coming from, its QoS class, priority level and BW required
2. ACM consults Table to see if a preemption is necessary and if so, sessions from which VN, QoS classes, priority levels need to be preempted
3. The ACM then asks the PS to send BW consumption info on those sessions (source/destination addresses (VN ID), QoS class IDs, priority levels)
4. The PS sends the BW info (in addition, lifetime info)
5. The ACM then selects the sessions to be preempted
6. It instructs the PS to drop those sessions (mentioning a combination of source/destination address, QoS classes, priority levels, session IDs)
7. The ACD can issue 'Remove Session State*' message to remove the reservation state for such sessions

FIG 16B

## Preemption among VN

Table: VN state at access control domain (for RDM)

| VN ID | QoS class | QoS class ID | Max reservable BW | Available BW |
|---|---|---|---|---|
| VN-0 | C0 | | C0 | Optional. Controller needs to maintain it if this info is not available from the switch |
| | C1 | | C1 + C0 | |
| | C2 | | C2 + C1 + C0 | |
| • • • | • • • | | | |
| VN-m | C0 | | C0 | |
| | C1 | | C1 + C0 | |
| | • • • | | | |
| | Cn | | Cn + Cn-1 + ... + C0 | |

1. Inter VN priority case

VN-1 > VN-0 > VN-7... >VN-n

In this case, for example, all QoS classes of VN-0 has a higher priority than all QoS classes of VN-7. Lets say, if C0 is the highest and C2 is the lowest priority classe in the whole (MPLS) network, C0 of VN-7 can be preempted to admit C2 of VN-0

2. Inter VN QoS class priority case

$C0_{(VN-1)} > C2_{(VN-0)} > C1_{(VN-7)} > C1_{(VN-1)}$ ....

Priority level is set for each QoS class in each VN for all the QoS classes over all VNs.

FIG 17

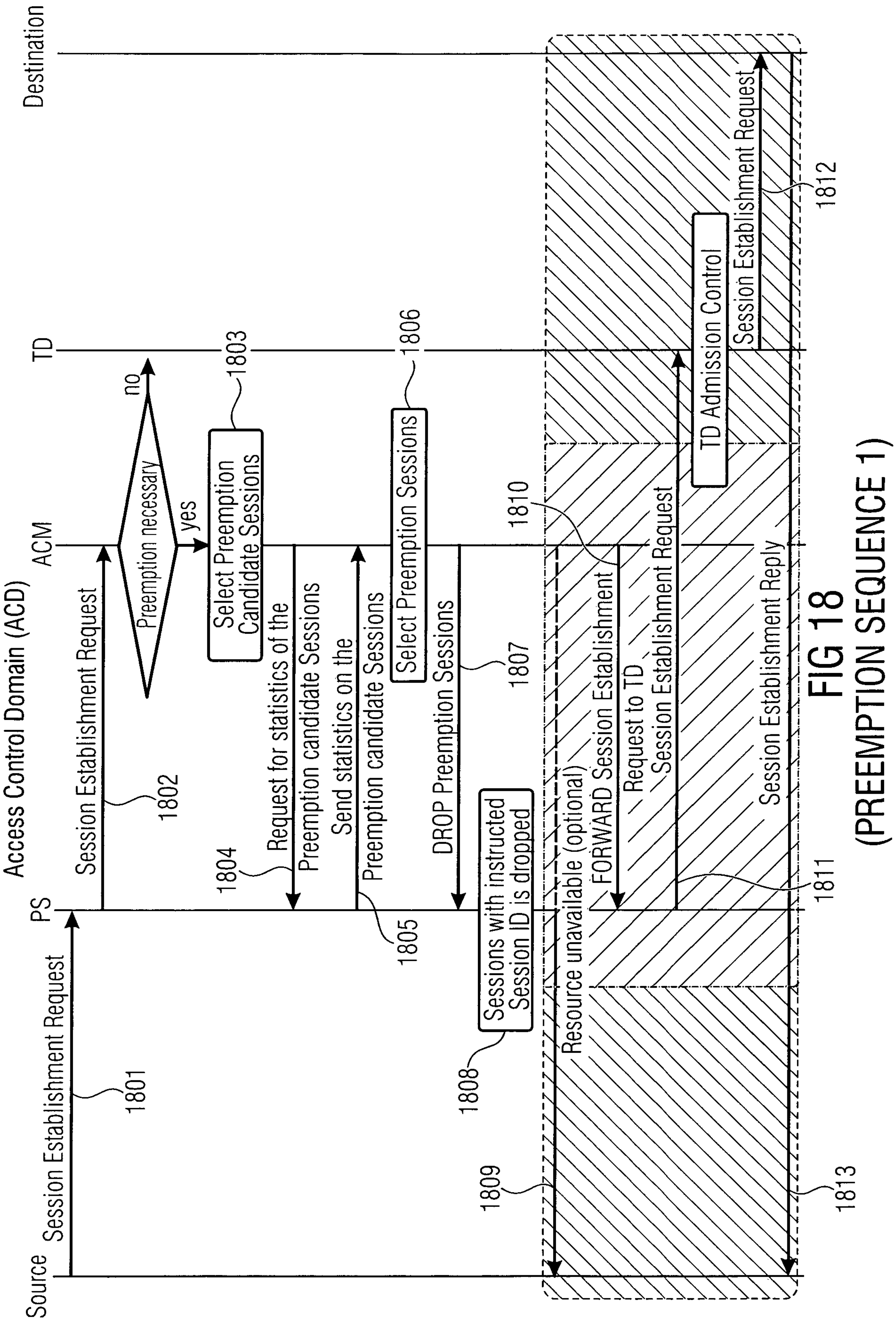


FIG 18
(PREEMPTION SEQUENCE 1)

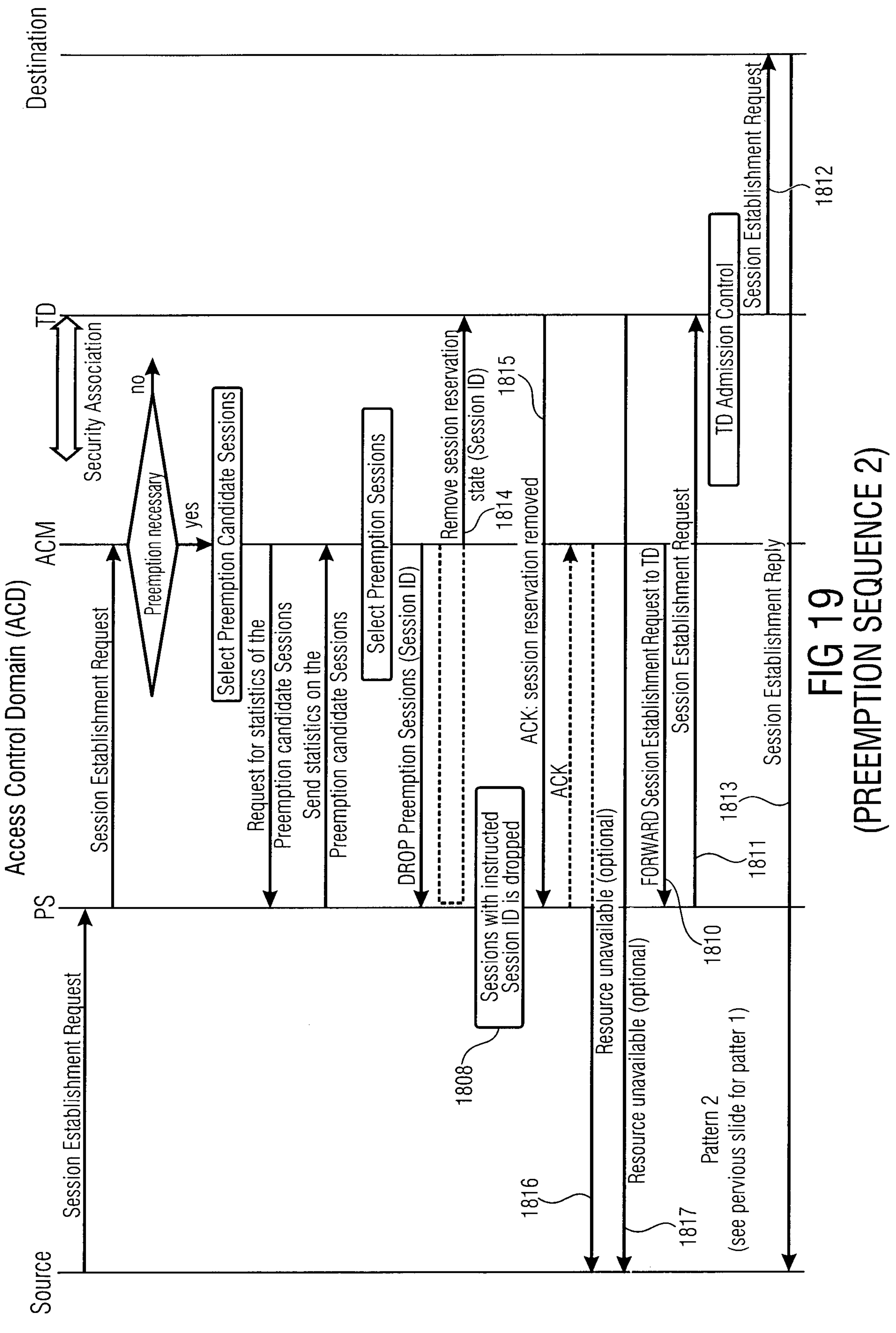

FIG 19
(PREEMPTION SEQUENCE 2)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090279568 A1

### Non-patent literature cited in the description


- Multiprotocol Label Switching Architecture. **E. ROSEN et al.** RFC 3031. IETF, January 2001
- Requirements for Traffic Engineering Over MPLS. **D. AWDUCHE et al.** RFC 2702. IETF, September 1999
- Protocol Extensions for Support of Diffserv-aware MPLS Traffic Engineering. RFC 4124. IETF, June 2005
- OpenFlow Switch Specification Version 1.3.0. *Open Networking Foundation (ONF),* June 2012, www.opennetworking.org
- Software-Defined Network Research Group (SDN-RG). IRTF
- Maximum Allocation Bandwidth Constraints Model for Diffserv-aware MPLS Traffic Engineering. **F. LE FAUCHEUR et al.** RFC 4125. IETF, June 2005
- Russian Dolls Bandwidth Constraints Model for Diffserv-aware MPLS Traffic Engineering. RFC 4127. IETF, June 2005
- Resource ReSerVation Protocol (RSVP). RFC 2205. IETF, September 1997
- RSVP-TE: Extensions to RSVP for LSP Tunnels. **D. AWDUCHE et al.** RFC 3209. IETF, December 2001
- Multi-Protocol Label Switching (MPLS) Support of Differentiated Services. RFC 3270. IETF, May 2002
- RSVP Cryptographic Authentication. **F. BAKER et al.** RFC 2747. IETF
- RSVP Cryptographic Authentication -- Updated Message Type Value. **R. BRADEN et al.** RFC 3097. IETF, April 2001